# EUROPEAN PATENT SPECIFICATION

(11) **EP 2 987 662 B1**
(45) Date of publication and mention of the grant of the patent: **31.05.2017**
(21) Application number: 14182019.1
(22) Date of filing: 22.08.2014
(51) Int. Cl.: B60D 1/06, B60R 9/06

(54) **Clamp mechanism**
Spannvorrichtung
Mécanisme de serrage

(43) Date of publication of application: 24.02.2016
(73) Proprietor: Thule Sweden AB, 330 33 Hillerstorp (SE)
(72) Inventor: Lundgren, Anders, 51470 Grimsas (SE); Svensson, Thomas, Vaernamo (SE); Larsson, Fredrik, 56791 Vaggeryd (SE); Strath, Simon, 55335 Joenkoeping (SE); Stark, Urban, 56731 Vaggeryd (SE)
(74) Representative: Wallentin, Lars

(56) References cited:
- EP-A2- 0 665 135
- WO-A1-2006/011805
- CN-U- 201 511 888
- FR-A- 1 441 648
- US-A- 3 650 546
- US-B1- 7 017 935

## Description

### BACKGROUND OF THE INVENTION

The present subject matter relates to a clamp mechanism mountable to a coupling device having a tow ball.

State of the art clamp mechanisms are widely used in coupling devices for coupling load carriers, for example bike carriers, to a ball hitch of a vehicle. Such clamp mechanisms typically comprise movable elements which are movable with respect to each other also known as clamp members. These clamp members are used to apply a force on the tow ball and the tow ball neck which is high enough to fixedly couple the load carriers to the ball hitch. In recent years, using load carriers provided on the ball hitch of a vehicle has become increasingly popular. This is due to the fact that such load carriers can be loaded more easily compared to roof top mounted load carriers. Document WO 2006/011805 discloses a clamp mechanism according to the preamble of claim 1.

In order to enhance the mountability of such a load carrier on the ball hitch, efforts have been made with respect to the functioning of the clamp mechanisms of the couplings of such load carriers. More precisely, attempts have been made to optimize the clamping force exerted on the ball hitch by the clamp mechanism so as to provide a reliable fixation on the ball hitch.

On the other hand, attempts have been made to allow a user to more easily mount the carriers on the ball hitch. In this connection, efforts have been made to allow the user to put the load carrier on the ball hitch in the first place and then to operate the clamp mechanism usually by means of a lever. In the mounting process, focus has been put on the balancing of such load carriers in an untensioned state. For example, arrangements have been developed which allow a load carrier to be horizontally stabilized when it is put on the ball hitch but still in an untensioned state. Such a configuration has the advantage that a user does not have to stabilize the load carrier with one hand while tensioning the clamp mechanism with the other hand.

It is the object of the invention to further develop the above known clamp mechanisms such that their functionality is enhanced, in particular such that greater forces for securing the load carrier on the coupling can be applied on the two ball without damaging the same.

### SUMMARY

The present subject matter relates to a clamp mechanism mountable to a coupling device having a tow ball supported by a tow ball neck.

According to a first aspect of the present subject matter, a clamp mechanism comprises a ball retainer having a ball support surface contactable at least to a first area of the tow ball located opposite to the tow ball neck.

The ball support surface can have different configurations and can be formed continuous or discontinuous. Accordingly, the ball support surface can have a smooth surface or can comprise recesses. Also, the ball support surface can comprise multiple areas or surfaces spaced from each other so that a gap is provided between them. Furthermore, the ball support surface can have a constant or varying width. For example, the ball support surface can have a ring like shape.

As an alternative, it is possible to provide a ball support surface having the shape of a spherical cap. At least a portion of the inner surface of such a spherical cap will then get into contact with a corresponding portion of the coupling device when the clamp mechanism is mounted on the coupling device. Depending on the shape of the coupling device, a corresponding contact will then be established. For example, in case the coupling device comprises a completely spherical tow ball, the spherical cap can have a curvature corresponding to the shape of the tow ball or can have a curvature having a radius larger than the radius of the tow ball.

The tow ball can comprise a flat upper end meaning that a space will be formed in the spherical cap defined by a portion of the inner surface of the spherical cap and the flat upper end of the tow ball. In this case, it is possible to provide the spherical cap with a corresponding flat upper surface in order to minimize the space between the ball support surface and the tow ball.

The ball support surface is contactable to a first area of the tow ball located opposite to the tow ball neck. Usually, the tow ball neck of a coupling device mounted on a vehicle extends from the tow ball in a vertical downward direction and is formed curved so as to extend towards the vehicle. The first area of the tow ball is located opposite to the tow ball neck. That is, in the configuration described before in which the tow ball neck extends in the vertical downward direction from the tow ball, the first area is located on the upper half of the tow ball. The upper half of the tow ball can be defined as the half of the tow ball located above a substantially horizontal plane extending through the middle of the tow ball and substantially vertical to the extension direction of the tow ball neck in a connecting portion where the tow ball neck is coupled to the tow ball. As is described before, the ball support surface can have different shapes and is contactable at least to the first area. Accordingly, the first area of the tow ball is contacted dependent on the shape of the ball support surface of the ball retainer.

The ball support surface is contactable at least to the first area of the tow ball. Accordingly, it is possible that besides the first area, the ball support surface contacts the tow ball at another area, a portion of the lower half of the tow ball for instance.

According to the present subject matter, the clamp mechanism further comprises at least two clamp members which are distributed about a center axis of the ball support surface.

The center axis of the ball support surface can be an axis about which the ball support surface extends. For example, the ball support surface can have a ring-like shape and - in this case - the center axis can pass through the geometric middle point of the ring-like shape. The center axis can extend in substantially vertical direction when the clamp mechanism is mounted to the coupling device.

The at least two clamp members are distributed about the center axis. Accordingly, the at least two clamp members can be arranged about the center axis at equal distance or at differing distance. Preferably, the at least two clamp members are distributed at equal distance about the center axis. Accordingly, in case two clamp members are provided, the clamp members are preferably arranged on a line passing through the center axis and on opposite sides of the center axis. The at least two clamp members can be provided on the same level along the center axis. However, it is also possible to provide at least one of the at least two clamp members on different levels along the center axis, e.g. in case the dimensions of the clamp members differ from each other.

According to the first aspect, each of the clamp members is movably arranged with respect to the ball retainer and has a ball clamping surface contactable at least to a second area of the tow ball located on the side of the tow ball neck.

A clamp member can perform different movements in order to be arranged movably with respect to the ball retainer. For instance, a clamp member can be pivotably arranged with respect to the ball retainer or can be arranged slidably along a path with respect to the ball retainer. A pivotal movement allows for a configuration in which the clamp members have a shape which can encompass the tow ball to a greater extent. In other words, arranging a clamp member pivotally with respect to the ball retainer allows the clamp member to have a shape which would not allow the clamp member to be provided around the ball head without such a pivotal movement. By this, it is possible to provide a configuration having improved clamping characteristics. Preferably, the clamp members are constructed such that they are hingedly supported on the ball retainer with a hinge axis provided between both longitudinal ends of the clamp members, preferably substantially midways between both longitudinal ends. In such an arrangement, both ends of the clamp members move about the hinge axis when the clamp members are rotated. Such a configuration has the advantage that the clamp members forming an insertion space between the same for inserting the tow ball when in an opened condition do not need to be opened as much as if they were hinged at their ends.

A movement of the clamp members along a specific path, preferably along a straight line, can be arranged for different purposes, including a higher force application or a locking function for instance, and is of special benefit when used in combination with a pivotal movement. To state it differently, a combined movement of the clamp members is possible and even favorable. In this case, at least one of the clamp members is movable both pivotably and slidably along a path. By this, it is possible to encompass the tow ball with the clamp members by pivotal movement of the same and to move the clamp members together with the tow ball into a position in which the pivotal movement of the clamp members is locked, for instance by engagement of a protrusion provided on the clamp members with a corresponding recess provided in another element of the clamp mechanism, preferably the ball retainer.

However, it is also possible that the clamp members are movable in different ways. For instance, it is possible that one clamp member is pivotably arranged while at least another clamp member is non-pivotably arranged and movable along a specific path only. Accordingly, different configurations are possible as long as the clamp members are movable with respect to the ball retainer.

Each clamp member has a ball clamping surface contactable to the second area of the tow ball, wherein the second area of the tow ball is located on the side of the tow ball neck. Accordingly, the second area can be located on the lower half of the tow ball. The ball clamping surface can comprise any suitable shape as long as a desired contact with the second area can be established. Preferably, the clamping surface has a shape following the shape of the tow ball in the second area so as to provide a large contact surface. Thus, in case the tow ball comprises a spherical shape, the shape of the ball clamping surface can have the shape of a spherical segment having substantially the radius of the tow ball.

According to the present subject matter, the clamp mechanism further comprises a tensioning member arranged movably along the direction of the center axis with respect to the ball retainer and interacting with each of the clamp members such that by applying a force to the tensioning member, a clamping force acting between the ball support surface and the ball clamping surfaces to the tow ball is achievable.

The tensioning member can have any suitable shape that allows the necessary force generation and/or transfer for achieving the desired clamping force when interacting with each of the clamp members. Here, interacting shall include a direct contact of the tensioning member with the clamp members or a force transfer onto the clamp members by means of a further intermediate element arranged in the force transfer path between the tensioning member and the clamp members so as to effect a movement of the clamp members for tensioning purposes. A direct contact between the clamp members and the tensioning member is, however, preferred. For that purpose, the tensioning member can comprise a force application section contactable with the clamp members. Accordingly, the clamping force acting on the tow ball is generated by a movement of the tensioning member. The tensioning member can be integrally formed or can comprise multiple parts. Furthermore, the force application section can comprise a flange portion for contacting the clamp members.

The tensioning member is guided so as to move along the center axis. For guiding purposes, it is possible to slidably support the tensioning member on the ball retainer. The tensioning member can thus be formed so as to at least partially accommodate the ball retainer therein.

Preferably, by an interaction between the tensioning member and the at least two clamp members, a movement of the at least two clamp members towards the ball support surface of the ball retainer is achievable. Such a movement is realized in case at least one portion of the clamp members performs such movement. In other words, a pivoting movement of the clamp members about an axis formed in the clamp members is also to be considered as movement of the clamp members towards the ball support surface. As already mentioned above, the tensioning member can directly contact the at least two clamp members in order to effect the movement of the same.

It is preferred that by an interaction of the tensioning member and the at least two clamp members, a movement of the tensioning member along the direction of the center axis is at least partially transformed into a movement of the at least two clamp members towards the center axis. In other words, by moving the tensioning member in the direction of the center axis, a movement of the two clamp members for reducing the distance between the clamp members and the center axis is achieved.

Each of the clamp members can comprise a force receiving surface and the tensioning member can comprise a force application section slidably contactable to the force receiving surfaces of the clamp members. The force receiving surface can be provided in any suitable shape and is advantageously formed on a portion of the clamp members facing away from the center axis. It is beneficial if the force receiving surface and the force application section are curved. Such a curvature is preferably designed taking the shape of the ball clamping surface into account. For example, the curvature can be provided concentrically to the curvature of the ball clamping surface. By this, a good force distribution and transfer is achieved. Preferably, the force application section comprises a sliding surface inclined with respect to the center axis. Accordingly, when the tensioning member is moved along the center axis, the force application section slides on the force receiving surface thereby applying a force thereon due to the inclined sliding surface. Depending on the inclination of the sliding surface with respect to the center axis, the movement of the tensioning member is transferred on to the force receiving surface with different characteristics.

Preferably, the tensioning member comprises an opening for passing the tow ball there through. By this, it is possible to provide a clamp mechanism which, when mounted on the coupling device, has the tensioning member arranged below the ball retainer. Furthermore, the inner circumference of the opening can form the force application section of the tensioning member. The inner circumference of the opening can be be formed continuous and can consequently have a ring-like shape. However, it is preferable, if the inner circumference of the opening consists of two or more surfaces. By this, it is possible to provide a flexible opening the inner circumference of which being variable to a certain extent.

According to a preferable embodiment of the present subject matter, the tensioning member accommodates the clamp members. Accordingly, the clamp members can be provided within the tensioning member. Accordingly, a configuration is possible in which the tensioning member surrounds the clamp members. For example, the clamp members can be directly supported on the tensioning member. In this connection, the ball retainer can be accommodated in the tensioning member. Furthermore, in such a configuration, the force receiving surfaces of the clamp members

Preferably, the clamp mechanism further comprises a housing wherein the tensioning member is slidably guided in the housing and wherein the ball retainer is coupled to the housing. Accordingly, the tensioning member can be accommodated in the housing. The tensioning member can comprise sliding portions which are in direct contact with the housing so as to slidably guide the same in the housing. In order to reduce the friction between the sliding portions and the housing and in order to provide a smooth operation, a friction reduction layer, for example a plastic layer, can be provided on the sliding portions. The ball retainer can be coupled to the housing in different ways, for example by means of screws. In this configuration, the tensioning member is movable with respect to the ball retainer and with respect to the housing. Furthermore, the tensioning member is in this configuration movably arranged between the ball retainer and the housing.

Preferably, the ball retainer is integrally formed with the housing.

According to a further preferable embodiment of the present subject matter, each of the clamp members comprises a neck support surface contactable at least to the tow ball neck. Accordingly, besides a ball clamping surface, each clamp member can comprise a neck support surface. If the clamp members comprise a force receiving surface, it is preferable if the force receiving surface and the neck support surface are provided at substantially the same position along the center axis.

Preferably, each of the clamp members is movable with respect to the center axis between an open position enabling the insertion of the tow ball between the clamp members and a closed position enabling an abutment of each of the neck support surfaces on the tow ball neck. Thus, by movement of the clamp members, an insertion space is provided allowing an arrangement of the clamp mechanism on the tow ball so that the clamp members are provided around the tow ball. In other words, the tow ball can be arranged in the space provided between the clamp members.

Furthermore, each clamp member can be movable along the direction of the center axis between a proximal position and a distal position with respect to the ball retainer.

In this connection, movable along the direction of the center axis includes every movement which is different from a movement in the radial direction with respect to the center axis. In other words, a movement along the direction of the center axis is not necessarily a movement strictly in parallel with that axis. Rather any movement with a movement component along the direction of that axis falls under the definition of a movement along the direction of the center axis. Thus, a movement of the clamp members along a path which is inclined with respect to center axis also falls under the present definition. However, it is preferred that each clamp member is moved in a direction parallel to the center axis.

The proximal position is to be understood as a position in which the clamp members are, as a whole, arranged nearer to the ball retainer than in the distal position. Thus, a contact between the clamp members and the ball retainer is possible in both positions. Accordingly, there needs to be no space between the ball retainer and the clamp members in order to qualify them being in a distal position. For example, the ball retainer can function as a guide for guiding the clamp members wherein in the distal position a portion of the clamp members protruding from the ball retainer in the center axis direction is larger than a portion of the clamp members protruding from the ball retainer when the same is in the proximal position.

The clamping mechanism can further comprise an arrangement for releasably locking each of the clamp members in the closed position when the clamp members are positioned in the proximal position. By this, it is possible to keep the neck support surfaces in contact with the tow ball neck.

As already described above, the closed position is a position in which the neck support surfaces of the clamp members contact the neck of the coupling device. In order to releasably lock the clamp members in the closed position, different configurations are possible. In case the clamp members are rotatably supported, locked in the closed position means that a rotational movement of the clamp members is prevented. This can be achieved in different ways. For example, it is possible to engage the clamp members with another element in order to lock a rotational movement of the same. On the other hand, it is possible to move a further element into abutment with the clamp members such further elements functioning as a stop preventing a rotation of the clamp members in one direction.

According to a preferable embodiment of the present subject matter, the ball retainer further comprises a receiving portion and the clamp members comprise an engaging portion engageable with a receiving portion for blocking a movement of the clamp members.

Preferably, the receiving portion is a recess formed in the ball retainer and the engaging portion is a protrusion formed on the clamp member. As described above, the clamp members can be movable along the direction of the center axis between a proximal position and a distal position with respect to the ball retainer. In case the engaging portion and the receiving portion are formed as described above, the engaging portion of the clamp member can be engageable with the recess of the ball retainer by movement from the distal position into the proximal position. For example, the protrusion formed on the clamp member can be inserted into the recess formed in the ball retainer.

The recess can comprise a shape which allows an insertion of the protrusion in the longitudinal direction of the recess, which corresponds to a direction along the center axis, but does not allow a movement of the protrusion in a direction perpendicular to the longitudinal direction of the recess. By this, a pivoting movement of the clamp members is prevented. In case the movement of the clamp members is blocked in this way in the closed position, the neck support surfaces are kept in contact with the tow ball neck.

Preferably, the ball retainer has sliding surfaces for slidably supporting the clamp members in the direction of the center axis.

In order to provide sliding surfaces, specific guiding paths can be provided in or on the ball retainer. A corresponding portion of the clamp members can be formed so as to be slidable along such a path on the sliding surface. The guiding paths can be formed by providing a groove in the ball retainer.

Preferably, the clamp members comprise two protrusions on opposite sides thereof via which they can be slidably supported on the sliding surfaces formed in the ball retainer. In order to support such clamp members, the grooves or recesses can be provided on two spaced apart portions of the ball retainer such that the grooves face each other. Accordingly, a construction can be provided in which the clamp members are held between two spaced apart portions of the ball retainer in grooves facing each other and defining the guiding path for the clamp members.

In order to render the clamp members rotatably, the sliding surfaces and the protrusions of the clamp members are formed matched with each other. That is, the sliding surfaces are formed taking the shape of the protrusions into consideration. As is obvious from above, the sliding surfaces do not necessarily form an outer surface of the ball retainer. It is also possible to provide a groove defining two sliding surfaces facing each other and arranging the protrusions of a clamp member slidably between the two sliding surfaces. The sliding surface can also be provided as an outer surface of the ball retainer directly facing towards the tensioning member, when the tensioning member is positioned around the ball retainer. In such a configuration, the sliding surfaces support the clamp members from radial inside meaning that the clamp members are not fixedly held on the ball retainer and can separate from the same in the radial outward direction if not prevented by means of a further element of the clamp mechanism. Therefore, in this configuration, the tensioning member can form the counterpart for defining a guiding path in that a sliding surface for the protrusions of the clamp members is provided on the tensioning member as well. In other words, the clamp members can be slidably held between the ball retainer and the tensioning member.

In this connection, it is beneficial if the friction between the tensioning member and the clamp members, more precisely between the tensioning member and a protrusion or pivot pin of the clamp members, is reduced. By this, it is possible to reduce the risk of an undesired lifting of the clamp members when the same are rotated. In case the protrusions or pivot pins of the clamp members rest against a surface of the tensioning member and too much friction is caused between the same, rotating the clamp members can lead to an undesired lifting of the same. This is due to the fact that a high friction causes the pivot pins of the clamp members to roll on the tensioning member rather than sliding thereon. Thus, in order to reduce the friction between the protrusions and the tensioning member, it is possible to provide a sliding surface on the tensioning member having a desired characteristic in this respect or to provide an intermediate element between the sliding portion of the clamp member and the supporting surface of the tensioning member, a sheet metal plate for instance, in order to reduce the friction.

Preferably, the clamp mechanism further comprises an elastic element for urging the clamp members into the open position. The elastic element can be a spring or a rubber band for example. The elastic element can be fixed to the clamp members near the neck support surface at one end and to the tensioning member at the other end thereof. In order to fix the elastic element on the clamp member, it is possible to provide an opening in the clamp member into which the elastic element is inserted so as to protrude from the same in the direction of the tensioning member. For the ease of mounting, the elastic element can comprise an enlarged portion at one end being larger than the opening provided in the clamp member so that a configuration can be achieved in which the enlarged portion abuts against the clamp member, the elastic element extends through the clamp member and a free end of the same is fixable on the tensioning member. With such a construction, it is possible to keep the clamp members in the open position as long as the tow ball is not inserted into the clamp mechanism.

According to a preferable embodiment of the present subject matter, the clamp members are pivotable about a pivot axis perpendicular and/or offset with respect to the center axis and wherein the movement of the tensioning member effects a pivoting movement of the clamp members. In order to render the clamp members pivotable about a pivot axis, the clamp members can comprise protrusions which may have a round shape but can generally have any shape suitable for allowing a pivoting movement. For example, the protrusions can be formed such that a pivoting movement is allowed to a certain degree only. In this connection, the outer contour of the protrusion when viewed in cross section perpendicular to the pivot axis can have a curved section and at least one flat section next to the curved section. While the curved section allows for a pivoting movement of the clamp members, the flat section functions as a stop for limiting the pivoting movement in one direction. Nevertheless, the flat section can act as a guiding surface allowing a sliding movement of the clamp members, on the inner surface of a tensioning member, for instance.

Preferably, the clamp mechanism further comprises a pivoting means for pivoting the clamp members wherein the pivoting means comprises a force receiving member contactable with the tow ball and transferring a pushing force exerted thereon by the tow ball into a pivoting movement of the clamp members.

The force receiving member can comprise an abutment portion formed on the clamp members and contactable with the first area of the tow ball.

Preferably, the pivot axis of the clamp members is with respect to a direction of the center axis arranged between the abutment portion and the ball clamping surface.

According to a further embodiment of the present subject matter, the pivoting means can comprise a tow ball abutment element pushable along the center axis by the tow ball and operatively connected to the clamp members such that a pushing force exerted on the tow ball abutment element is transferred into a pivoting movement of the clamp members.

Preferably, the tow ball abutment element is a flexible element connecting the clamp members. Such a flexible element can comprise a band made of a fabric for instance.

Preferably, the clamp mechanism is configured such that the at least two clamp members can take a first state in which the clamps are rotated in an open state allowing the insertion of the tow ball between the same, a second state in which the clamps are rotated such that the ball clamping surfaces and the neck support surfaces are in contact with the tow ball and the ball neck, respectively, a third state in which the rotatability of the clamps is locked and a fourth position in which a final tensioning force is exerted on the tow ball and the ball neck by the clamp members which final tensioning force is higher than the force applied on the tow ball and the ball neck by the clamp members in the second state.

According to a second aspect of the present subject matter, a coupling for connecting a load carrier to a ball hinge is provided, wherein the coupling comprises a clamp mechanism as described above and an operating mechanism for operating the clamp mechanism.

The operating mechanism comprises a lever pivotably supported on a support about pivot, a force application joint connected to the lever, a force transmitting element pivotably connected to the force application joint and pivotably connected to a tensioning member of the clamp mechanism at a force application section for applying a force on the tensioning member. A pivotal distance between the force application joint and the pivot is smaller than a pivotal distance between the force application joint and the force application section. Preferably, in a tensioning position of the lever, the force application joint is positioned at a presettable distance from the support. The operating mechanism further comprises an adjustment means for presetting the presettable distance between the force application joint and the support in order to adapt the tensioning force on the tensioning member.

Since the lever is pivotably supported on the support, a pivoting movement of the lever is possible. The pivotable support of the lever against the support can be established by direct contact between a portion of the lever and the support or can be established with an intermediate element interposed between the lever and the support. The lever can comprise a gripping handle for operating the same. Furthermore, the lever can comprise an engaging member for locking the movement of the lever and an actuating portion for releasing the locking of the lever. The engaging member can comprise an engaging bar the ends of which being engageable with a recess or abutment portion of a suitable element for locking the movement of the lever in an open direction.

The support can be any suitable means for supporting a lever. Such a suitable means can be a rigid structure designed to provide a sufficient supporting function. Accordingly, the support can comprise means for supporting the lever thereon. Furthermore, the support can comprise means for connecting the same to other elements. For example, the support can be designed to be mountable to the clamp mechanism to be operated by the operating mechanism.

The pivot can be an articulated joint. Accordingly, the pivot can be designed so as to enable a rotational movement of the lever about a stationary axis or point of the lever. Accordingly, the pivot can be an axial joint or a ball joint. Furthermore, the pivot can also be realized as a supporting point or area on the support on which a portion of the lever is slidably moved. For example, a portion of the lever contacting the supporting point or area can have the shape of a cam riding on a surface of the support. On the other hand, it is possible to provide such a supporting point or area on an intermediate element provided between the lever and the support. With such a construction, it is possible to support the lever by means of a cam and provide a movablity about a rotational axis wherein the axis is guided. For example, it is possible to guide the latter axis such that it is vertically moved by the action of the cam. In this connection, it is possible to form the support such that the axis is guided by a portion of the support, in side walls for instance.

The force application joint can be any means for transferring force from the lever onto another element. Accordingly, the force application joint is to be understood as a connecting portion which can be constructed in different ways. For example, the force application joint can comprise a hinge mechanism comprising for example a pivot pin which can be fixed to the lever or provided rotatably on the lever. It is also possible that the force application joint comprises at least one part of a ball joint. Accordingly, it is possible, that a ball holder or a ball head of another element is fixed on the lever. According to a preferable embodiment, the force application joint is a pivot pin fixedly and non-rotatably provided on the lever.

The force transmitting element can be any suitable means for transmitting a desired force from the force application joint to the tensioning member of the clamp mechanism. Accordingly, the force transmitting element can comprise different constructions and configurations. For example, the force transmitting element can be an elongate plate member made of metal. The force transmitting element can also have the shape of a rod. Furthermore, it is also possible to use a steel wire as the force transmitting element. In general, the force transmitting element can comprise any suitable form and material which provides the desired force transmitting function.

According to the present embodiment, the force transmitting element is pivotably connected to the force application joint. For example, in case the force transmitting element is an elongate plate member and the force application joint comprises a pivot pin on which the elongate plate member is mounted, the elongate plate member can comprise an opening having a diameter slightly larger than the outer diameter of the pivot pin. The force transmitting element is connectable to the tensioning member of the clamp mechanism at a force application section for applying a force on the tensioning member.

In order to provide a pivotal connection to the tensioning member of the clamp mechanism, the force application section can comprise different constructions. For example, the force application section can comprise a pin which is insertable into an opening provided in the tensioning member in order to provide a pivotable connection. On the other hand, the force application section can comprise an opening into which a pin or protrusion of the tensioning member is insertable. The force transmitting element is designed for applying a force on the operated member. Accordingly, the force transmitting element is either designed to apply a pulling force or a pushing force on the tensioning member. This is, however, dependent on the construction of the operated member.

The pivotal distance between the force application joint and the pivot is smaller than the pivotal distance between the force application joint and the force application section. Accordingly, the mechanism functions as a toggle lever and amplifies an input force to provide a greater output force. In case the force application joint and the pivot comprise a pin, the pivotal distance can be seen in the shortest distance between the longitudinal axes of the pins.

In a tensioning position of the lever, the force application joint is positioned at a presettable distance from the support. The tensioning position is a position, in which a sufficient tensioning force is generated and transferred to the force transmitting element such that the clamp mechanism is clamped on the coupling device. The tensioning position can be an abutment position of the lever. Preferably, the abutment position is designed so that the lever is placed in a substantially horizontal position when reaching the abutment position. The abutment position can be a position in which the force application joint, the pivot and the force application section are located in the same plane. The tensioning position can also be a position in which the force application joint is positioned such that a rotational force is exerted on the lever in the direction of the tensioning position of the lever. By this, a self-locking function is achieved.

By presetting the distance of the force application joint with respect to the support the final position of the tensioning member of the clamp mechanism is set. Thus, adjusting the presettable distance from the support effects a change of the final position of the tensioning member and consequently has influence on the final tensioning force exerted on the clamp members by the tensioning member.

Preferably, an adjustment means for presetting the presettable distance in order to adapt the tensioning force of the tensioning member can be provided. The adjustment means can be any suitable means for changing the distance between the force application joint and the support. For example, the adjustment means can be a means for adjusting the pivotal distance between the pivot and the force application joint. By changing the distance between the pivot and the force application joint, the movement radius of the force application joint about the pivot is changed and consequently the distance of the force application joint from the support in the tensioning position is changed correspondingly. The adjustment means can also be a means for adjusting a distance between the pivot and the support. Since the force application joint is arranged in specific relation to the pivot, changing the distance between the pivot and the support also changes the distance between the force application joint and the support in the tensioning position.

Preferably, the pivot comprises a pivot axis. Accordingly, the lever can be supported on the support by an axial joint or a hinge joint. By this, a reliable force transmitting connection between the lever and the support is achieved enabling a transfer of high loads. Furthermore, such a connection is simple in construction.

The pivot axis can be arranged stationary. By arranging the pivot axis stationary, a shifting of a pivot axis is not possible. In other words, the location of the pivot axis is not movable with respect to the support. Accordingly, the lever is only allowed to rotate about the pivot axis. The latter described stationary arrangement of the pivot axis shall, however, also include the possibility, that a pivot pin is used which is rotatable about its own axis. In other words, arranged stationary only means that the pivot axis is not shiftable with respect to the support. By this, a simple and reliable mechanism is provided.

Furthermore, the pivot axis can be guided such that the shortest distance between the pivot axis and the support is variable. By guiding the pivot axis in this way, it is possible to vary the position of the force application joint in the tensioning position in a defined way. Different possibilities are available for guiding the pivot axis. For example, a guiding groove can be used. This provides a simple and reliable construction for adjusting the shortest distance between the pivot axis and the support in a defined way. The guiding groove can be formed in a side wall of the support, for instance.

According to a preferable embodiment of the present subject matter, the operating mechanism comprises a pivot pin defining the pivot axis. The pivot pin can be arranged rotatable or non-rotatable with respect to the lever. Furthermore, it is possible to mount such pivot pin rotatably or non-rotatably on the support.

Preferably, the adjustment means comprises a means for adjusting the pivotal distance between the pivot and the force application joint. Such an adjustment means can be any mechanism allowing such an adjustment including a screw mechanism or a lever mechanism. Also, a combination of different mechanisms is possible. For example, it is possible to provide a movable element which is movable with respect to the pivot and to provide the force application joint on such movable element.

Advantageously, the operating mechanism comprises an adjustment means with a first adjusting portion and a second adjusting portion arranged pivotably movable with respect to each other about a pivot axis, wherein the force application joint is coupled to the first adjusting portion and the hinge axis is coupled to the second adjusting portion, and an adjusting mechanism for effecting the movement of the first and second adjusting portions with respect to each other so as to adjust the pivotal distance between the hinge axis of the lever and the force application joint, wherein preferably the second adjusting portion is fixed on or integrally formed with the lever.

The first and second adjusting portions can have the shape of flat plates arranged parallel with respect to each other. In order to render the first and second adjusting portions pivotably movable about a pivot axis, the first and second adjusting portions can be coupled to a pivot pin defining the pivot axis. Such a pivot pin can be passed through openings provided in the respective adjusting portion or can be integrally formed with one adjusting portion. In case the pivot pin is integrally formed with one adjusting portion, by casting or welding for instance, the other adjusting portion can be arranged pivotably on such pivot pin.

It is preferred, that the first adjusting portion comprises a first guiding track and the second adjusting portion comprises a second guiding track, wherein the adjusting mechanism comprises a pin guided in the first and the second guiding tracks so that a movement of the pin effects a movement of the first and second adjusting portions with respect to each other about the pivot axis.

According to a preferable embodiment of the present subject matter, the adjusting mechanism comprises a threaded rod coupled to the lever at one end and the pin comprises a threaded opening, wherein the pin is mounted on the other end of the threaded rod with the threaded rod passed through the opening so that the pin is movable in the longitudinal direction of the threaded rod upon rotation of the same, wherein the threaded rod comprises an operating portion for rotating the same.

Each of the first and second adjusting portions can comprise a plate and each of the first and second guiding tracks can comprise a groove formed in the plates, wherein the grooves are preferably straight and wherein the first guiding track is inclined with respect to the second guiding track.

Preferably, the adjusting mechanism comprises a force application element pivotably connected to the first adjusting portion and movably arranged with respect to the second adjusting portion, wherein the force application element preferably extends through an opening provided in the second adjusting portion, the opening having a dimension allowing a free movement of the force application element, and wherein the adjusting mechanism preferably further comprises an actuating means for effecting the movement of the force application yoke, the actuating means preferably comprising a screw engaging with the force application element and the lever such that a rotational movement of the screw is transferred into a movement of the force application element with respect to the first adjusting portion in the longitudinal direction of the screw.

The adjustment means can comprise a spacing means for adjusting the distance between the pivot and the support.

Preferably, the spacing means comprises a wedge supporting the pivot on one side and contacting the support on the opposite side, the wedge being movably arranged between the pivot and the support.

Furthermore, the operating mechanism can comprise a locking means for releasably locking the movement of the lever, the locking means having an engaging member engageable with an engaging portion formed on the force transmitting element.

According to a further aspect, a coupling for connecting a load carrier to a ball hitch can comprise a clamp mechanism as described above and an operating mechanism for operating the clamp mechanism. The operating mechanism can further comprises a force application yoke supported movably relative to a support, a force transmitting element connected to the force application yoke and connected to a tensioning member of the clamp mechanism at a force application section for applying a force on the tensioning member, and an operating mechanism for effecting the movement of the force application yoke. The operating mechanism can comprise a screw threadedly engaged with the force application yoke. The screw can abut against the support at one end or can be rotatably and axially non movably supported on a supporting yoke arranged at a distance from the support, such that a rotational movement of the screw is transferred into a movement of the force application yoke in an axial direction of the screw. In a tensioned position of the force application yoke, the force application yoke is positioned at a predetermined distance from the support, wherein the predetermined distance is larger than a distance of the force application yoke from the support in an untensioned position.

According to a third aspect of the present subject matter, a load carrier, for example a bike carrier, is provided comprising a clamp mechanism as described before and/or a tensioning mechanism as described before.

### BRIEF DESCRIPTION OF THE DRAWINGS

- Figure 1: shows a perspective view of a load carrier and a coupling device of a vehicle onto which the load carrier can be mounted;
- Figure 2: shows an exploded view showing main components of a clamp mechanism according to the present subject matter;
- Figure 3: shows a perspective view of a ball retainer and a clamp member associated with the ball retainer;
- Figure 4: shows a sectional view in the direction of arrow A shown in Figure 3;
- Figures 5A and 5B: show perspective views of a clamp member according to the present subject matter;
- Figure 6: shows a perspective view of a tensioning member according to the present subject matter;
- Figure 7: shows a sectional view in the direction of arrows B shown in Figure 6;
- Figure 8: shows a sectional view of a clamp mechanism according to the present subject matter in a clamping state;
- Figures 9A and 9B: show an opened state of the clamp mechanism wherein Figure 9A shows the position of an operating lever in this state and Figure 9B shows a sectional view of the clamp mechanism in that state;
- Figures 10A and 10B: show an intermediate state of the mounting process of the load carrier on a coupling device wherein Figure 10A shows the position of the operating lever and Figure 10B shows a sectional view of the clamp mechanism;
- Figures 11A and 11B: show a balancing position in the mounting process of the load carrier on the coupling device wherein Figure 11A shows the position of the operating lever and Figure 11B shows a sectional view of the clamp mechanism;
- Figures 12A and 12B: show a clamped state of the mounting process of the load carrier wherein Figure 12A shows the position of the operating lever and Figure 12B shows a sectional view of the clamp mechanism in this state;
- Figures 13A and 13B: show a sectional view of a clamp mechanism according to the present subject matter showing elastic elements for urging the clamp members into the open position, wherein 13A shows the clamp members in the closed position and Figure 13B shows the clamp members in the open position;
- Figure 14: shows a sectional view of a modification of the clamp mechanism according to the present subject matter, in which a means for pivoting the clamp members is provided;
- Figure 15: shows a perspective view of the operating mechanism for operating the clamp mechanism according to the present subject matter;
- Figure 16: shows a perspective view of main components of the operating mechanism in an exploded view;
- Figures 17 and 18: show views of the operating mechanism and the clamp mechanism partially in cross section, wherein Figure 17 shows a state in which the operating mechanism is in an untensioned state and Figure 18 shows a condition in which the operating lever is in a tensioning state;
- Figures 19 to 23: show views of specific elements of the operating mechanism, wherein Figures 19A and 19B show a state in which the operating mechanism is in the state shown in Figure 17 and Figures 20A, 20B and 21 to 23 show states corresponding to that of Figure 18;
- Figure 24: shows an alternative embodiment of an operating mechanism for operating the clamp mechanism;
- Figures 25 to 27: show side views of the operating mechanism shown in Figure 24, wherein some elements are omitted in Figures 26 and 27 for explanation purposes;
- Figure 28: shows a perspective view of a further embodiment of the operating mechanism;
- Figures 29 and 30: show side views of the operating mechanism shown in Figure 28;
- Figure 31: shows a sectional view of the operating mechanism shown in Figure 28 as viewed in the direction of arrow C;
- Figures 32A, 32B, 33A: show an alternative operating mechanism for operating the clamp
- and 33B: mechanism of the load carrier, wherein Figures 32A and 32B show the operating mechanism in an untensioned state and Figures 33A and 33B show the operating mechanism in a tensioned state;
- Figures 34A, 34B, 35A: show a further alternative embodiment of an operating mechanism
- and 35B: for operating the clamp mechanism, wherein Figures 34A and 34B show the operating mechanism in an untensioned state and Figures 35A and 35B show the operating mechanism in a tensioned state.

### DESCRIPTION OF THE EMBODIMENTS

In the following, embodiments of the present subject matter will be explained based on the drawings. It is noticed that the drawings show specific embodiments as explained below and further alternative modifications as specified in the description are at least in part not illustrated therein. Furthermore, same reference signs used in the figures denote same components.

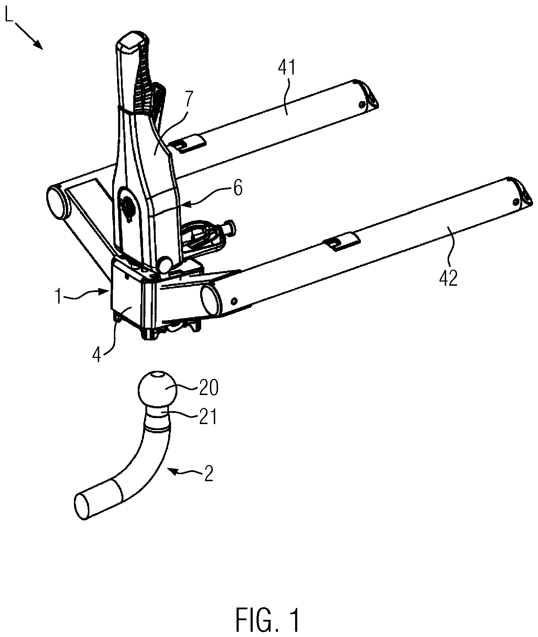

Figure 1 shows a load carrier L comprising a clamp mechanism 1 according to the present subject matter as well as an operating mechanism 6 for operating the clamp mechanism 1. Furthermore, Figure 1 shows a coupling device 2 having a tow ball 20 and a tow ball neck 21.

The clamp mechanism comprises a housing 4 supporting two load carrying means 41, 42 which form suitable supports for supporting fastening means for goods to be transported. In the present embodiment, the load carrying means 41, 42 both have a bar-like form allowing to fix load carrying elements, for example of a bike carrier, thereto. However, the load carrying means can have any suitable shape as long as it is possible to fix load carrying elements on the same.

As is shown in Figure 1, the operating mechanism 6 for operating the clamp mechanism 1 is provided above the clamp mechanism 1, more specifically, mounted on the housing 4 of the clamp mechanism 1. The operating mechanism 6 comprises a lever 7 which is operated by a user in order to actuate the clamp mechanism 1. The state of the lever 7 shown in Figure 1 corresponds to a state in which the clamp mechanism 1 is in an untensioned state and allows the user to arrange the load carrier L on the coupling device 2. In the embodiment, the lever 7 is pivotable in a longitudinal direction of a vehicle on which the coupling device 2 is mounted. It is, however, also possible to provide an operating mechanism in which the lever 7 is pivoted in a different direction. For example, it is possible to arrange the lever 7 such that it is pivotable in a direction substantially perpendicular to the longitudinal direction of the vehicle for space saving reasons.

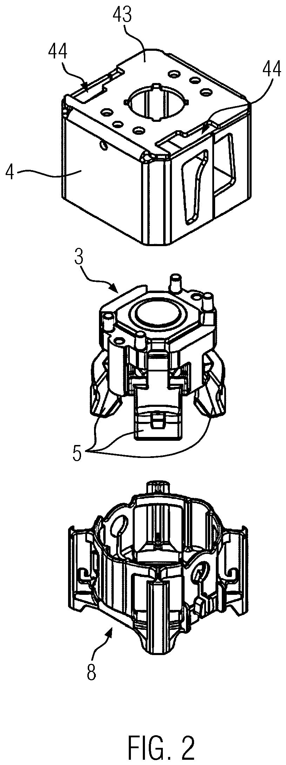

The main components of the clamp mechanism 1 according to the present subject matter are shown in Figure 2 in an exploded view. The main components shown in Figure 2 include the housing 4, a ball retainer 3, clamp members 5 and a tensioning member 8.

The housing 4 provides enough space for at least partially accommodating the ball retainer 3, the clamp members 5 and the tensioning member 8 therein. Furthermore, the housing comprises an upper portion 43 which can serve as a suitable support for supporting the operating mechanism 6 thereon. In the present embodiment the housing 4 is integrally formed from a sheet metal which is cut and bent into the desired form. Two openings 44 are formed in the upper portion 43 of the housing 4. The function of the openings 44 will be described later.

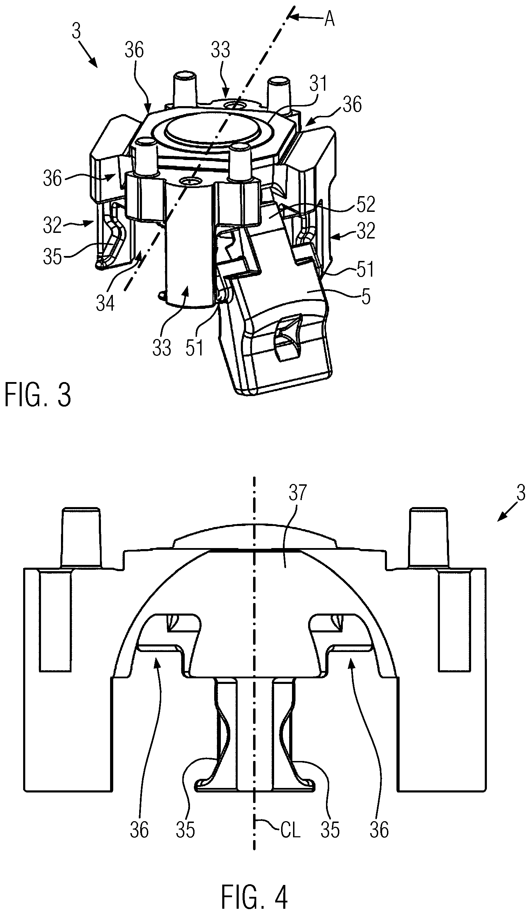

Figures 3 and 4 show the construction of the ball retainer 3 in greater detail. Figure 3 shows an enlarged perspective view of the ball retainer 3 with only one clamp member 5 arranged on the same. Further clamp members have been omitted here for illustration purposes. The ball retainer 3 comprises a support portion 31 extending over substantially the entire width of the ball retainer 3. In Figures 2 and 3, the support portion 31 is also an upper end portion of the ball retainer 3. Furthermore, the ball retainer 3 comprises four leg portions 32, 33 extending in a downward direction from the support portion 31 in Figures 2 and 3. The leg portions 32, 33 are arranged at equal distance from each other so that four clamp member spaces 34, each for accommodating one clamp member 5, are formed between them. On the sides of adjacent leg portions 32, 33 of the ball retainer 3 facing towards each other, recesses are provided in order to form sliding surfaces 35 for supporting the clamp members 5. Theses sliding surfaces 35 are designed to guide protrusions 51 of a clamp member 5 along a specific path.

Furthermore, the ball retainer 3 comprises four recesses 36 each for accommodating an engaging portion 52 of a clamp member 5. The recesses 36 are arranged at equal distance from the leg portions 32, 33 in the upper portion, i.e. the support portion 31, of the ball retainer 3 as shown in Figure 3. The cooperation of the engaging portion 52 of the clamp member 5 with the recess 36 provided in the ball retainer 3 will be described in detail later.

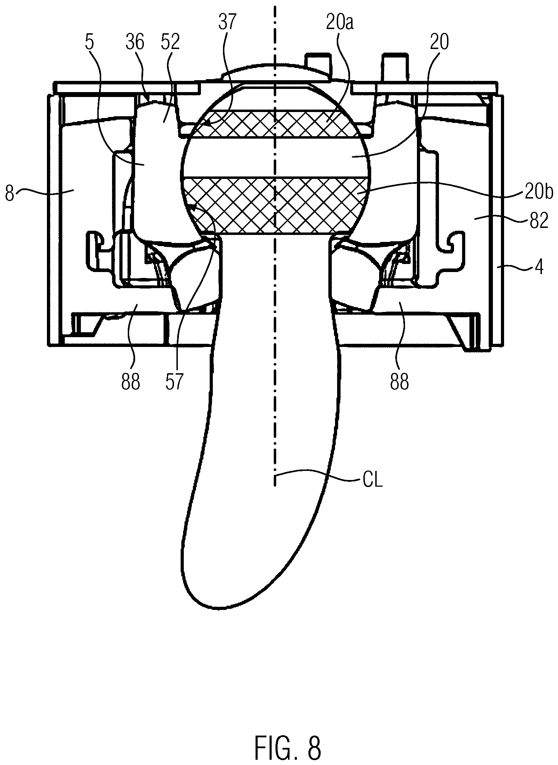

Figure 4 shows the ball retainer 3 in cross sectional view viewed in the direction of arrow A in Figure 3. As is shown in Figure 4, the ball retainer 3 comprises a ball support surface 37 which is provided for contacting the tow ball 20 of the coupling device 2. In order to provide a large contact area, the curvature of the ball support surface 37 substantially corresponds to the curvature of the outer surface of the tow ball 20. The area on the tow ball 20 which is contactable to the ball support surface 37 is also referred to as first area 20a of the tow ball 20 in the following and is shown and described later with reference to Figure 8.

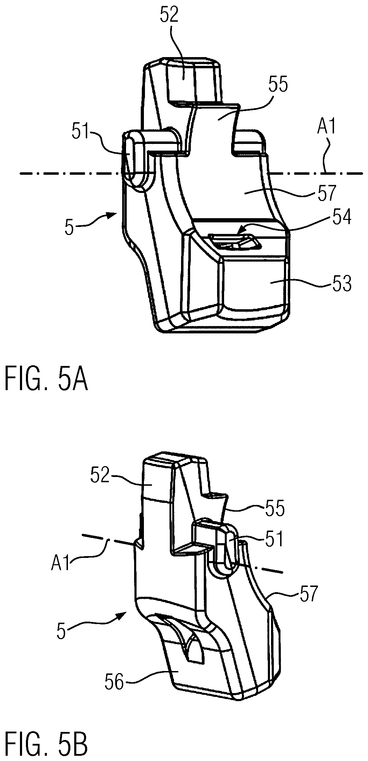

Figures 5A and 5B show perspective views of a clamp member 5 in greater detail. As is shown in Figures 5A and 5B, each clamp member 5 is an elongate element comprising two protrusions 51 which are designed for pivotably supporting the clamp member 5 on the sliding surfaces 35 of the ball retainer 3. The protrusions 51 extend in opposite directions from the lateral sides of a clamp member 5. The protrusions 51 comprise a shape which allows the clamp member to rotate about a pivot axis A1. In other words, the shape of the protrusions 51 is designed such that in cooperation with the sliding surfaces 35 of the ball retainer 3 a pivoting movement of the clamp member 5 about the pivot axis A1 can be effected. In the following, the portion of the clamp member 5 located above the pivot axis A1 in Figure 5A will be referred to the upper portion of the clamp member 5 whereas the portion located below the pivot axis A1 in Figure 5A will be referred to as lower portion of the clamp member 5.

In the upper portion of the clamp member 5, the clamp member further comprises an engaging portion 52 in the form of a protrusion extending in a direction substantially perpendicular to the pivot axis A1. The engaging portion 52 is provided so that the clamp member 5 can be engaged with a corresponding recess 36 in the ball retainer 3 via the engaging portion 52. A pivoting movement of the clamp member 5 about the pivot axis A1 is prevented when the engaging portion 52 is engaged with the corresponding recess 36. Such a locking state of the clamp member 5 will be explained later in detail.

Furthermore, the clamp member 5 comprises an abutment portion 55 also formed in the upper portion of the clamp member 5. The abutment portion 55 is contactable with the tow ball so that a force can be transferred from the tow ball to the abutment portion 55. Accordingly, the abutment portion 55 corresponds to a force receiving member which is contactable with the tow ball 20.

As is shown in Figure 5A, the abutment portion 55 according to the embodiment comprises a curved surface with a curvature substantially corresponding to the curvature of the tow ball. However, the shape of the abutment portion 55 is not limited to the shape shown in connection with the present embodiment. By contrast, the abutment portion can have any suitable shape as long as it is possible to establish a contact between the abutment portion 55 and the tow ball 20 and to transfer a desired force from the tow ball 20 to the clamp member 5. Since the abutment portion 55 is provided at a distance from the pivot axis A1 as shown in Figure 5A, a pushing force induced by contact and movement of the tow ball 20 leads to the generation of a rotational force about the pivot axis A1. Accordingly, the pushing force exerted on the abutment portion 55 of the clamp member 5 is transferred into a pivoting movement of the clamp member 5.

In the lower portion of the clamp member 5, there is provided a neck support surface 53 for establishing contact with a tow ball neck 21 of the coupling device 2. In order to provide a suitable contact area, the neck support surface 53 comprises a curvature substantially corresponding to the curvature of the outer surface of the tow ball neck 21.

As is further shown in Figure 5A, the clamp member 5 can additionally comprise an opening 54 through which an elastic member can be passed. The elastic member functions as a means for urging the lower portion of the clamp member 5 radially outward. This function will be described later.

Also, the clamp member 5 comprises a ball clamping surface 57 provided in the lower portion of the clamp member 5. Each clamp member 5 is arranged in cooperation with the ball retainer 3 in such a manner that the abutment portion 55, the ball clamping surface 57, the opening 54 and the neck support surface 53 are all oriented towards a center axis CL of the ball retainer 3, i.e. the later elements are all provided on the same side of the clamp member 5. In other words, when the clamp mechanism 1 is mounted on the coupling device 2, the ball clamping surface 57, the neck support surface 53, the abutment portion 55 and the opening 54 are all oriented towards the coupling device 2, more precisely towards the tow ball 20 and the tow ball neck 21, respectively. Therefore, the side of the clamp member 5 on which the latter four elements are provided is also referred to as the inner side of the clamp member 5. In accordance with the latter definition, the side of the clamp member 5 facing in the opposite direction is also referred to as the outer side of the clamp member 5.

The outer side of the clamp member 5 is shown in Figure 5B in greater detail. As is obvious from this figure, the opening 54 provided in the lower portion of the clamp member 5, as described above with respect to Figure 5A, extends from the inner side to the outer side of the clamp member 5 to its outer side. A force receiving surface 56 is provided on the outer side of the clamp member 5 at the lower portion thereof. In the present embodiment, the force receiving surface 56 is provided substantially at the same distance from the pivot axis A1 as the neck support surface 53. Such a configuration is however not strictly necessary and it is possible to provide the latter surfaces with a differing distance from the pivot axis A1. In either case, it is preferable if the force receiving surface 56 is provided remote from the pivot axis A1 for the following reason. The force receiving surface 56 is provided for receiving a tensioning force from the tensioning member 8. Therefore, it is preferable if the force receiving surface 56 is provided as far as possible from the pivot axis A1 in order to achieve a favorable leverage effect. As will be described later in greater detail, the ball clamping surface 57 is used to apply a clamping force on the tow ball 20 of the coupling device 2. In order to generate a suitable clamping force, it is desirable to provide the ball clamping surface 57 nearer to the pivot axis A1 than the force receiving surface 56.

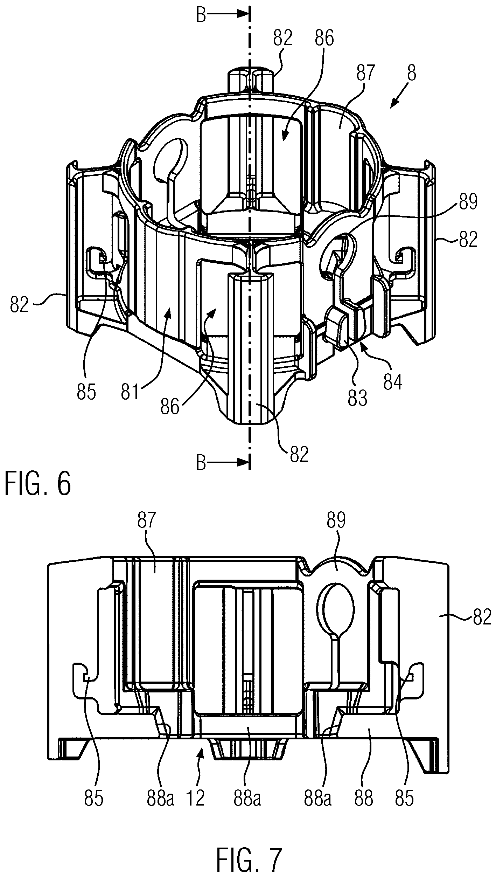

In the following, the construction of the tensioning member 8 is described with reference to Figures 6 and 7.

Figure 6 is an enlarged perspective view of the tensioning member 8 according to the present subject matter. The tensioning member comprises a main body 81 having substantially the shape of a hollow cylinder. Accordingly, the main body 81 comprises an inner surface and an outer surface. On the outer surface of the main body 81 guide portions 82 are provided equidistantly. Each of the guide portions 82 comprises an outer guide surface. The guide portions 82 are provided for slidably supporting the tensioning member 8 in the housing 4.

Furthermore, the tensioning member 8 comprises a force receiving section 83 for receiving a force from a force transmitting element 10 of the operating mechanism 6. More precisely, the tensioning member 8 comprises two force receiving sections 83 at opposite ends thereof. According to the present embodiment, each force receiving section 83 consists of two protrusions being arranged with a gap provided between them. The gap can also be referred to as cutout 84 and divides the lower portion of tensioning member 8 in two parts being connected by means of a bridging portion 89 provided in the upper portion of the main body 81 of the tensioning member 8 as shown in Figure 6. This configuration provides a certain flexibility of the lower portion of the tensioning member 8 so that upon applying a specific force on the force receiving section 83, more precisely on the two protrusions, the gap between the two protrusions can be reduced thereby deforming the tensioning member 8 such that the outer circumference of the lower portion is slightly reduced and the lower ends of the tensioning member are moved towards each other.

As is further shown in Figure 6, four clamp openings 86 are provided at equal distance in the main body 81 of the tensioning member 8. More precisely, the clamp openings 86 are provided at positions where the guide portions 82 are located and radially inward from the same. The clamp openings 86 are formed so as to provide a sufficient space for accommodating the clamp members 5 therein. The guide portions 82 are formed such that each of them spans one clamp opening 86 in a direction substantially parallel to the axial extension direction of the tensioning member 8.

On the inner side of the guide portions 82, fixation portions 85 are provided for connecting a free end of an elastic member provided in the opening 54 of the clamp members 5 to the same. This will be described later in greater detail.

Moreover, the tensioning member 8 comprises ball retainer guide sections 87 which are formed so as to at least accommodate a portion of the leg portions 33 of the ball retainer 3 in a slideably movable manner. As is shown in Figure 6, the ball retainer guide sections 87 extend in a direction substantially parallel to the axial direction of the tensioning member 8. Accordingly, the ball retainer guide sections 87 are suitable for supporting the ball retainer 3 in an axially movable manner.

Figure 7 is a cross-sectional view of the tensioning member 8 shown in Figure 6 viewed in the direction of arrows B. More precisely, the cross-sectional view shown in Figure 7 is a cross section of the tensioning member 8 in a plane passing through the middle of the guide portions 82. As is shown in Figure 7, the guide portions 82 are integrally formed with the main body 81 of the tensioning member 8.

In the lower portion of the tensioning member 8, an opening 12 is provided for passing the tow ball therethrough. The opening 12 is formed by force application sections 88. The force application sections 88 are provided for contacting a force receiving surface 56 of a clamp member 5. The force application sections 88 comprise a sliding surface 88a contactable to the force receiving surface 56. The opening 12 is formed by the sliding surfaces 88. The sliding surface 88a of the force application section 88 is preferably designed corresponding to the shape of the force receiving surface 56 in order to provide a good force transfer and inclined with respect to the center axis CL. Furthermore, it is beneficial if the force receiving surface 56 and the sliding surface 88a of the force application section 88 are formed smooth so that a friction between the same is low. By this, it is possible to reliably transfer a movement of the tensioning member 8 in the axial direction into a pivoting movement of the clamp members 5.

Figure 8 shows the clamp mechanism 1 and the coupling device 2 in cross-sectional view. More precisely Figure 8 shows a state in which the clamp mechanism 1 is mounted on the coupling device 2 and is furthermore in a tensioned state meaning that the clamp members 5 are pressed against the tow ball 20 and the tow ball neck 21 by means of the tensioning member 8. In other words, Figure 8 shows a state in which a load carrier comprising such a clamp mechanism is mounted on a coupling device and ready to use. As is shown in this figure, the tow ball 20 contacts the ball support surface 37 at a first area 20a in the upper half of the tow ball 20 in Figure 8. Furthermore, the ball clamping surfaces 57 of the clamp members 5 contact the tow ball 20 at a second area 20b in the lower half of the tow ball 20 and a clamping force is exerted on the contact areas pushing the tow ball 20 against the ball support surface 37. By this, the necessary clamping force is achieved.

The mounting process of the load carrier 1 on the coupling 2 will be described in the following.

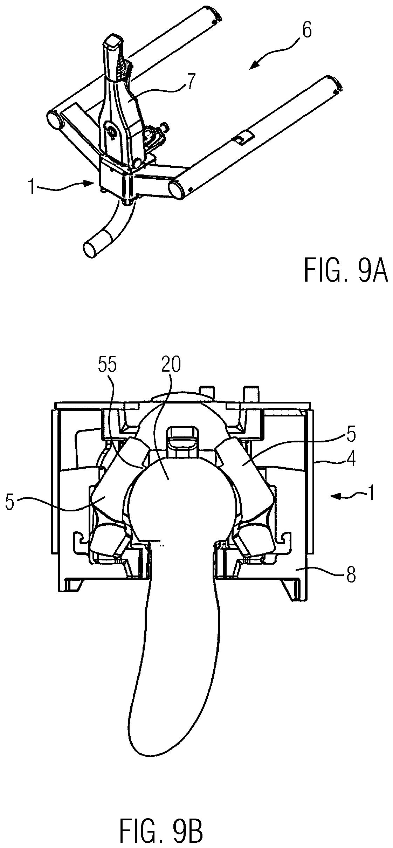

Figures 9A and 9B show an open state of the clamp mechanism 1 into which the tow ball 20 of the coupling device 2 is inserted. As is shown in Figure 9A, the operating mechanism 6 is in an initial state with the lever 7 being in a substantially vertical position. The operating mechanism 6 serves for actuating the tensioning member 8 for applying a tensioning force on the clamp members 5.

Additionally to the lever 7, the operating mechanism 6 comprises a force transmitting element 10 which is on the one hand coupled to the lever 7 and on the other hand coupled to the force receiving section 83 of the tensioning member. The operating mechanism 6 is constructed such that a movement of the lever 7 effects a movement of the tensioning member 8 in its axial direction. A detailed construction of the operating mechanism 6 will be described later and it will now be focused on the function of the clamp mechanism 1.

As is shown in Figure 9B, the clamp mechanism 1 is in a state in which the tensioning member 8 accommodated in the housing 4 is in a position in which a portion of the same protrudes from the housing 4 at the below end of the housing 4. The clamp members 5 are in an open position which means that the lower ends of the clamp members 5 are pivotably moved radially outward to a position in which the clamp members 5 allow the insertion of the tow ball 20 between them. Furthermore, in the state shown in Figure 9B, the tow ball 20 is already inserted through the opening formed in the lower portion of the force transmitting element 8 up to a position in which the upper surface of the tow ball 20 is in contact with the abutment portions 55 of the clamp members 5.

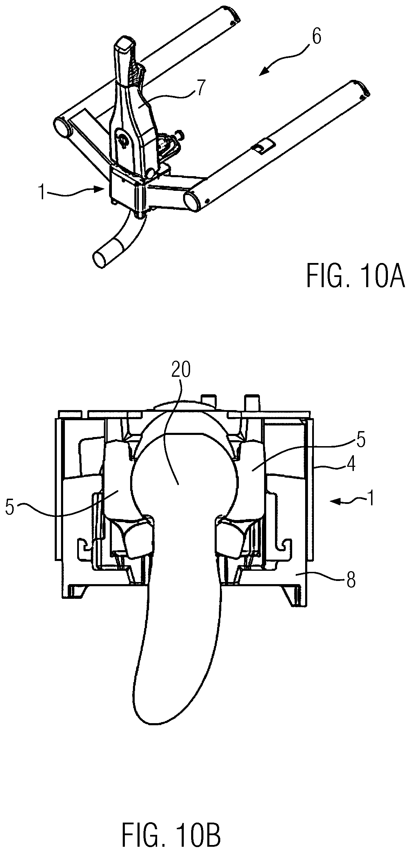

As is further shown in Figure 9B, a further movement of the tow ball 20 in the upward direction is only possible with a rotational movement of the clamp members 5. Thus, as a next step of the mounting process the clamp mechanism 1 is moved in the downward direction corresponding to a further insertion of the tow ball 20 in the upward direction in Figure 9B. More precisely, the clamp mechanism and the tow ball 20 are moved relatively to each other until the tow ball 20 is position in an intermediate position as shown in Figure 10B.

The intermediate position shown in Figure 10B is a position in which the clamp members 5 are pivotably rotated into a position in which the neck support surface 53 is in contact with the tow ball neck 21 and the ball clamping surface 57 is at least partially in contact with the second area of the tow ball 20, i.e. with the surface on the side of the tow ball neck. As is also shown in Figure 10B, the clamp members 5 have not only been pivoted about their pivot axes but have also been moved vertically, that is slightly upward in a direction of the center axis CL of the ball retainer 3 as can be seen from a comparison of Figures 9B and 10B. As is shown in Figure 10A, the operating mechanism is still not operated when the clamp mechanism 1 is in the intermediate position. Accordingly, since the operating mechanism 6 is not operated, the tensioning member 8 is also not moved and remains in the initial position shown in Figure 9B. However, as is shown in Figure 10B, the tow ball 20 is still not in contact with the ball support surface 37 of the ball retainer 3.

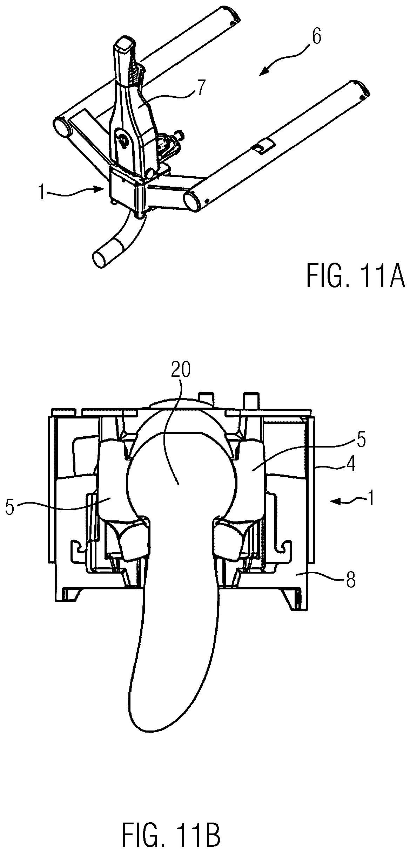

Figures 11A and 11B show a state of the clamp mechanism 1 in which the tow ball 20 is contacted to the ball support surface 37 of the ball retainer 3 at the first area. As is shown in Figure 11B, the tow ball 20 is inserted further in a vertically upward direction up to the position where it is in contact with the ball support surface 37. By this, the clamp members 5 are moved in the vertical upward direction up to a position in which the engagement portions 52 of the clamp members 5 are engaged with the recesses 36 of the ball retainer 3. The recesses 36 are formed such that a radially inner surface of the engagement portions 52 of the clamp members 5 is in contact with a surface of the recess facing radially outward. By this, a pivoting movement of the clamp members 5 is reliably blocked so that the movement of the neck support surfaces 53 radially outwards is not possible. By this construction, a condition is achieved in which a rotational movement of the clamp mechanism about the ball head can be prevented as much as possible due to the fact that a movement of the neck support surfaces 53 of the clamp members 5 in the radial outward direction is inhabited by the engagement of the engagement portions 52 with the recesses 36 of the ball retainer 3. Therefore, the position of the clamp members 5 with respect to the ball retainer 3 is also referred to as balancing position and the state of the clamp mechanism shown in Figures 11A and 11B is also referred to as balancing state in the following.

As can be gathered from Figure 11A, the operating mechanism 6 is still in the initial condition meaning that the lever 7 has not been operated so far. Therefore, the position of the tensioning member 8 still corresponds to the positions shown in Figures 9B and 10B.

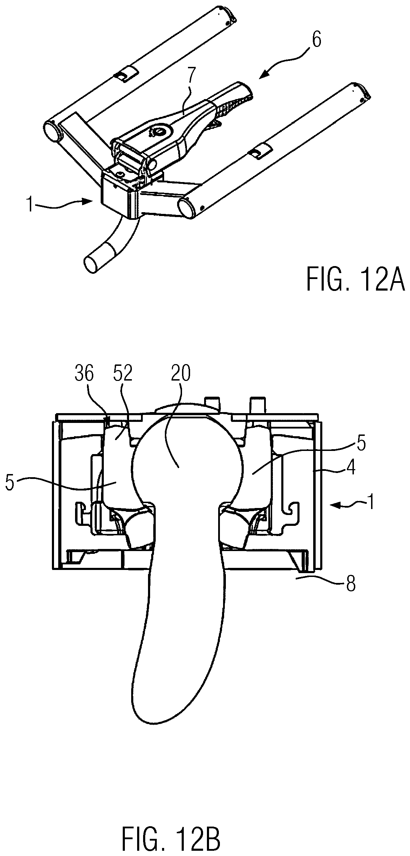

A mounted condition of the clamp mechanism 1 on the coupling device 2 is shown in Figures 12A and 12B. The condition of the clamp mechanism 1 in this state is also referred to as clamping state for the following reason. As is shown in Figure 12A, the lever 7 of the operating mechanism 6 is pivotably moved about 90 degrees. By this, the tensioning member 8 is axially moved in the vertical upward direction in Figure 12B up to a position in which it is almost fully accommodated in the housing 4. By this movement, the force application sections 88 of the force transmitting member 8 are brought into contact with the force receiving surfaces 56 of the clamp members 5. Since the sliding surfaces 88a of the force application sections 88 are inclined with respect to the center axis CL of the ball retainer 3, that is inclined with respect to a middle axis of the clamp mechanism 1, the movement in the axial direction of the tensioning member 8 results in the application of a force on the force receiving surfaces 56 in the radially inward direction. By this, the lower portions of the clamp members 5 are pushed radially inward so that a firm contact of the neck support surfaces 53 with the tow ball neck 21 as well as a firm contact between the ball clamping surfaces 57 with the second area of the tow ball neck is achieved. Consequently, a clamping force is generated pushing the tow ball 20 in the upward direction against the ball support surface 37 of the ball retainer 3.

The clamp mechanism as described before has the following advantages. First of all, the construction of the clamp mechanism 1 is very compact and space saving due to the pivotable arrangement of the clamp members 5. Furthermore, by supporting the clamp members 5 such that they are pivotably movable and axially movable in the axial (upward) direction, it is possible to establish a balancing state as described with reference to Figure 11B. As soon as the balancing state is achieved, the load carrier is stabilized by contact of the neck support surfaces 53 with the tow ball neck 21. Accordingly, whilst still in an untensioned state, the clamp mechanism 1 provides a stabilizing function preventing a rotational movement of the clamp mechanism 1 about the tow ball 20 and therefore prevents a rotational movement of the load carrier. Accordingly, the load carrier is in a stabilized state so that a user does not have to manually support or carry the load carrier while operating the operating mechanism 6 for tensioning the clamp mechanism 1.

While the mounting process of the clamp mechanism on the coupling device has been described before in detail, it is to be mentioned that the dismounting of the clamp mechanism from the coupling device is possible by carrying out the mounting steps in reverse order. Therefore, a detailed description of a dismounting process is omitted here.

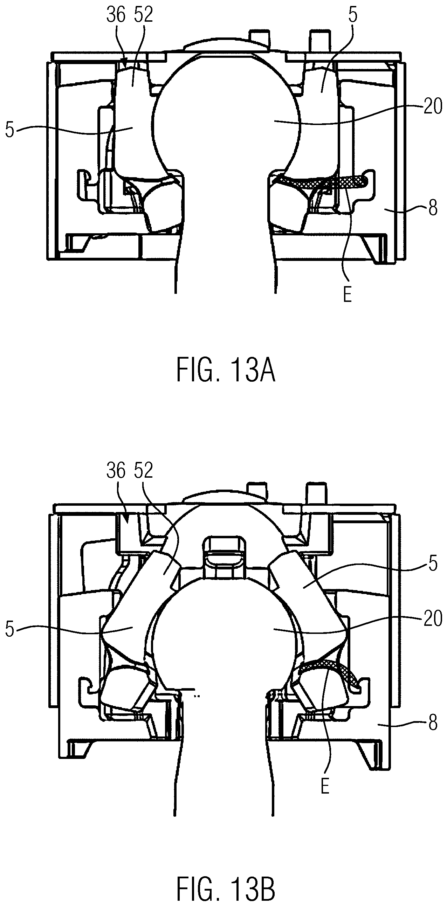

Figures 13A and 13B show constructions of the clamp mechanism 1 in which additionally to the elements as described before, an elastic member is provided in the opening 54 of the clamp members 5 and is connected to the fixation portion 85 of the tensioning member 8. The elastic member E is configured such that in the state as shown in Figure 13A, substantially no force is applied on the clamp members 5. Such a configuration is provided because a force application in this state would act against the tensioning force of the clamp members 5. On the other hand, the elastic member E is designed such that in the position shown in Figure 13B, a force is applied on the clamp members 5 pulling the lower ends of the clamp members towards the open position, i.e. radially outward. By using such elastic members E it is possible to reliably bring the clamp members 5 into the open position so that the insertion and removal of the tow ball 20 into and from the clamp mechanism 1 is easily possible.

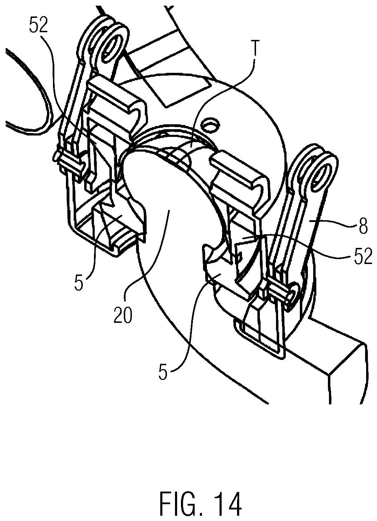

A further configuration slightly differing from the configurations of the clamp mechanism 1 as described so far is shown in Figure 14. More precisely, Figure 14 shows a clamp mechanism basically functioning in a similar way as described before. However, additionally to the elements described before, a clamp mechanism comprises a tow ball abutment element T in the form of a flexible element connecting the lower portions of the clamp members to each other. Accordingly, when the tow ball 20 is inserted into the clamp mechanism 1, the tow ball abutment element T gets into contact with the tow ball surface and is pushed vertically upwards leading to a movement of the clamp members in which the lower portions thereof carrying the neck support surfaces 53 are pulled radially inward and upward. Thus, providing such a tow ball abutment element can assist in pivoting the clamp members 5. On the other hand, providing such a tow ball abutment element can also function as a substitute of the abutment portions 55 of the clamp members 5 as described with respect to Figures 5A and 5B.

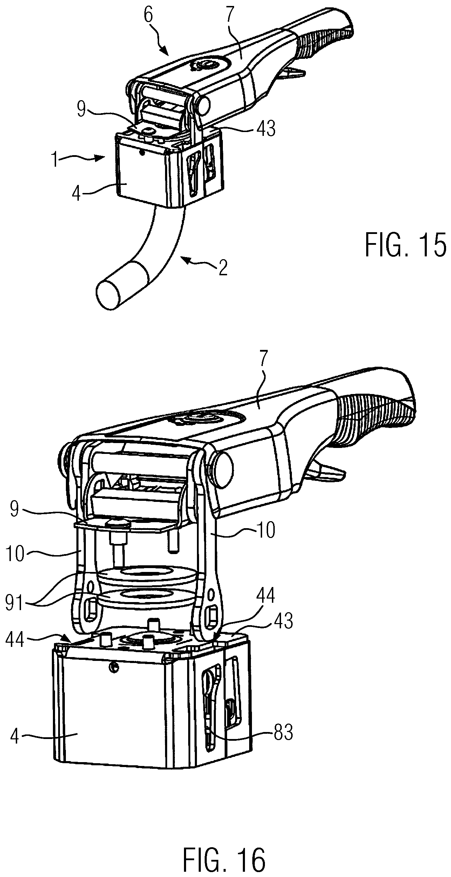

Figure 15 shows a clamp mechanism 1 with an operating mechanism 6 mounted thereon. The operating mechanism 6 comprises a lever 7 which in the view shown in Figure 15 is in a tensioning position. Characterizing for the tensioning position is that the lever according got the present embodiment extends in substantially horizontal direction and, due to its construction, transfers a force to the clamp mechanism which is transferred into the clamping force.

The construction and arrangement of the operating mechanism 6 is shown in Figure 16 in greater detail. Figure 16 shows an exploded view of the clamp mechanism 1 and the operating mechanism 6. Additionally to the lever 7, the operating mechanism 6 comprises a support 9 which is fixedly connectable to the upper portion 43 of the housing 4. As is further shown in Figure 16, disc springs 91 are provided between the support 9 and the upper portion 43 of the housing 4. The disc springs 91 are provided for compensating a stiffness in the system. The disc springs 91 are connected in parallel in order to increase the force necessary for deforming the same.

The operating mechanism 6 further comprises two force transmitting elements 10. Each force transmitting element 10 is connected to the operating mechanism 6 at one end and to the force receiving section 83 of the tensioning member 8 at the other end. When the operating mechanism 6 is mounted on the upper portion 43 of the housing 4, the force transmitting elements 10 are arranged so as to pass through openings 44 provided in the upper portion 43 of the housing 4. By this, it is possible to connect the force transmitting elements 10 to the respective force receiving sections 83 of the tensioning member 8 which is accommodated in the housing 4.

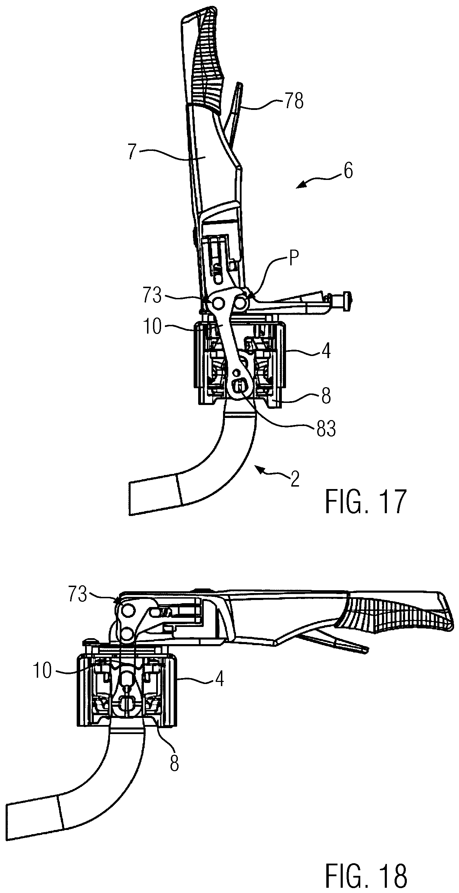

More detailed views of the operating mechanism 6 as well as the connection of the same to the tensioning member 8 by means of the force transmitting elements 10 are shown in Figures 17 and 18. Figure 17 shows an untensioned state of the operating mechanism 6 in which the lever 7 extends in substantially vertical direction. Figure 18 shows a tensioned state of the operating mechanism 6 in which the lever 7 extends substantially in horizontal direction. In both figures, the clamp mechanism 1 as well as a part of the lever 7 are shown in sectional view. Furthermore, in Figure 18, the force transmitting element 10 is shown transparent.

As is shown in Figures 17 and 18, the force transmitting element 10 is connected to the lever 7 at a force application joint 73 at one end and connected to the force receiving section 83 of the tensioning member 8 at its other end. The portion of the force transmitting element 10 at which the same is connected to the force receiving section 83 is also referred to as force application section F.

The lever 7 is supported against the support 9 about a pivot P. Accordingly, when the lever 7 is rotated in the clockwise direction from a position shown in Figure 17 into the position shown in Figure 18, the force application joint 73 is also moved about the pivot P. due to the construction of the clamp mechanism and the connection of the force transmitting element 10 to the tensioning member 8, the rotational movement of the lever 7 is transferred into a linear movement of the tensioning member 8. A more detailed description of the operating mechanism 6 will be given in the following.

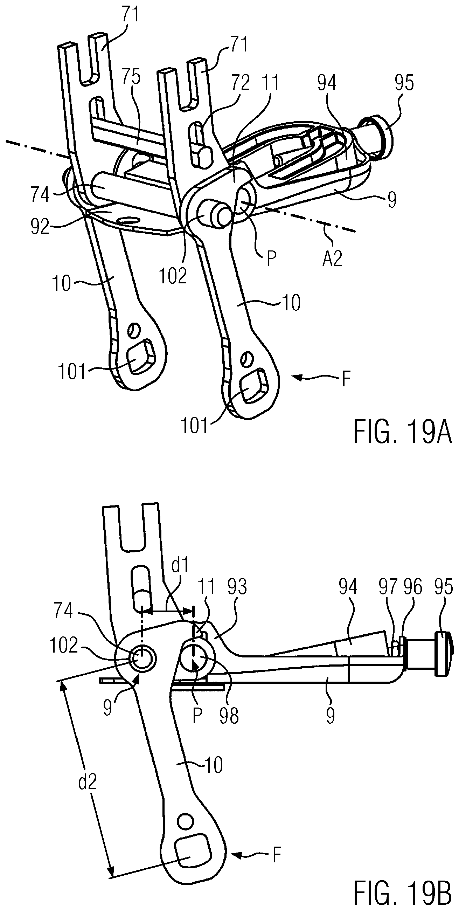

Figures 19A and 19B show a perspective view and a side view of core elements of the operating mechanism 6, respectively. As is shown in Figure 19A, the operating mechanism 6 comprises a lever portion 71, which, as shown in Figure 17, is connected to the lever 7. While the lever portion 71 is shown as a separate element here, this lever portion 71 can also be integrally formed with the lever 7. The lever portion 71 comprises a substantially flat shape and can be made of a sheet metal for instance. The lever portion 71 comprises a recess 72 in which a portion of an engaging member 75 is accommodated. The engaging member 75 comprises dimensions allowing the same to slidably move in the recess 72. The lever portion 71 is rotatably supported on the support 9 via the pivot P. In the present embodiment, the pivot P is realized by means of a pivot pin 98 accommodated in an opening of the lever portion 71. The construction of the pivot pin 98 as well as its arrangement on the support 9 will be described later. Accordingly, a construction is achieved in which the lever portion 71 is pivotable about the pivot pin 98.

As is also shown in Figures 19A and 19B, the force application joint 73 is provided at a predetermined distance from the pivot pin 98. This predetermined distance will be referred to as pivotal distance d1 in the following. In the present embodiment the force application joint 73 comprises a force application pin 74. Thus, the pivotal distance d1 can be considered as the distance between the center lines of the pivot pin 98 and the force application pin 74.

The force application section F of the force transmitting element 10 is provided at a predetermined distance from the force application joint 73. This distance will also be referred to as pivotal distance d2 in the following. More precisely, the force application section F of the force transmitting element 10 comprises a first opening 101 into which the force receiving section 83 of the clamp mechanism 1 can be inserted. Furthermore, the force transmitting element 10 comprises a second opening 102 into which the force application pin 74 is inserted. Thus, the pivotal distance d2 can be considered as the distance between the center axis of the force application pin 74, that is the middle of the second opening 102, and the middle of the first opening 101 of the force application section F.

As is shown in the figures, the pivotal distance d2 is larger than the pivotal distance d1. In the present embodiment, the tensioning member 8 is movably arranged in direction substantially perpendicular to the support 9 of the operating mechanism 6. Since the force application section F is connected to the force receiving section 83 of the tensioning member 8, the center of the first opening 101 moves on an axis substantially parallel to the center axis CL of the ball retainer 3. Accordingly, upon moving the lever portion 71, the distance between the force application section F and the support 9 is changed.

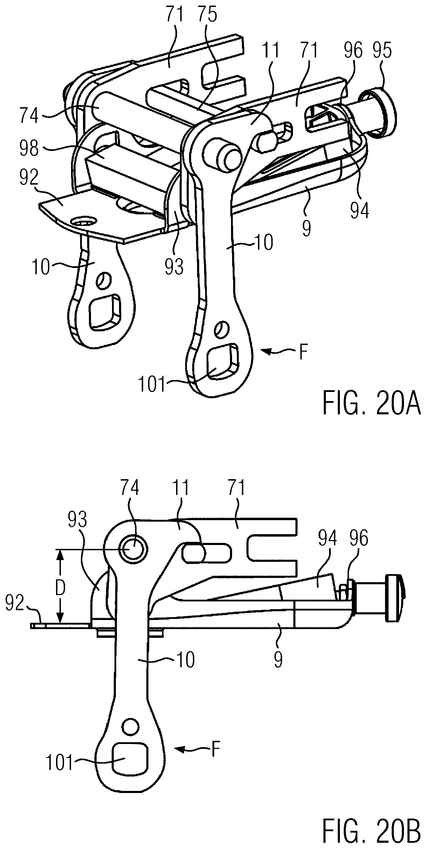

Figures 20A and 20B show the main parts of the operating mechanism 6 as described with respect to Figures 19A and 19B wherein the lever 7 and the lever portion 71 are in a tensioning position. In this tensioning position, the force application joint 73 and consequently also the force application pin 74 are positioned at a distance D from the support. According to the present embodiment, the distance D is presettable by means of an adjustment means.

The adjustment means comprises a spacing means. The spacing means comprises a wedge element 94, an operating member 95 and a screw 97. The wedge element 94 is supported on an upper surface of a base portion 92 of the support 9. On an upper surface of the wedge element 94 which is inclined with respect to the base portion 92 of the support 9, the pivot pin 98 is slidably arranged. In other words, the wedge element 94 is arranged between the pivot pin 98 and the upper surface of the base portion 92 of the support 9. Furthermore, the wedge element 94 is horizontally movably arranged on the support 9. In order to effect the movement of the wedge element 94, an operating member 95 is rotatably arranged on a rear wall 96 of the support 9. The operating member 95 is connected to the wedge element 94 by means of a screw 97 in such a manner that a rotation of the operating member 95 leads to a movement of the wedge element 94 in the axial direction of the screw 97. Accordingly, by this arrangement, it is possible to adjust the position of the wedge element 94 with respect to the pivot pin 98.

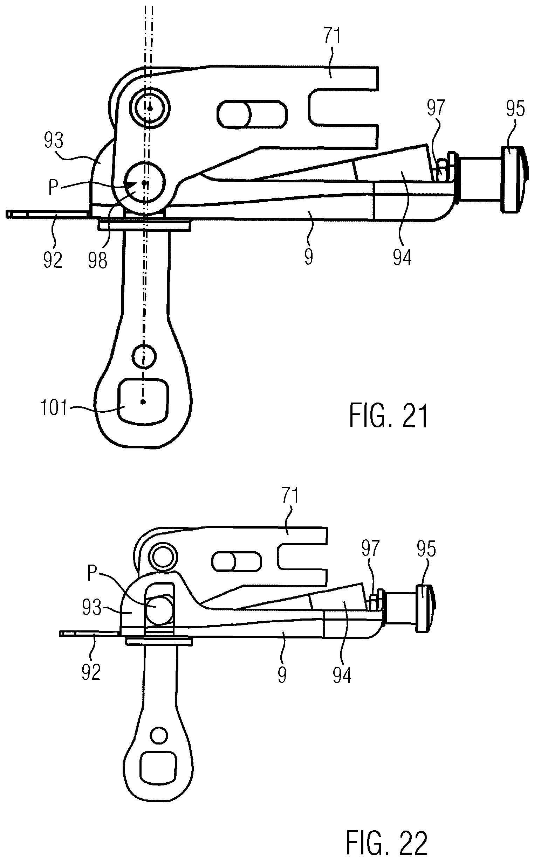

Since the upper surface of the wedge element 94 is inclined with respect to the base portion 92 of the support 9, a movement of the wedge element 94 towards the pivot pin 98 results in a movement of the pivot pin 98 in a direction facing away from the support. In other words, the distance between the pivot pin 98 and the support 9 is changed. In order to provide such a movement of the pivot pin 98, the support 9 comprises side walls 93 having guiding grooves extending in substantially perpendicular direction to the base portion 92 of the support 9. The side walls of the support 9 as well as the guiding grooves formed therein are best seen in Figure 22 which shows a side view of the operating mechanism 6, in which the force transmitting element 10 and the lever portion 71 shown in Figures 19A and 20A in the front are omitted in order to give a clear view on the construction of the support 9. Advantageously, the support 9 is formed from pressing a sheet metal into the desired shape.

As is further shown in Figures 19A, 19B, 20A and 20B, the engaging member 75 is moved under an abutment portion 11 formed in the upper end of the force transmitting element 10 when the lever portion 71 is in the tensioning position. The abutment portion 11 functions as a stop so that - as soon as the engaging member 75 is positioned under the abutment portion 11 as shown in Figures 19B and 20B - a movement of the lever portion 71 is blocked. In order to release the locking, an operating member operable by the user is provided in the lever 7.

As is shown in Figure 21, the force application joint 73, more precisely, the center of the force application pin 74 is in the tensioning state of the operating mechanism 6 arranged with a small distance from a plane spanned by the pivot axis A2 of the pivot pin 98 and a connecting line between the center of the pivot pin 98 and the center of the first opening 101. Due to this, a rotational force is generated about the pivot P urging the lever portion 71 towards the tensioning position. Accordingly, the construction comprises a self locking function in which the lever portion 71 will remain in the tensioning position unless a force is applied on the lever 7 overcoming the force urging the lever in the tensioning position.

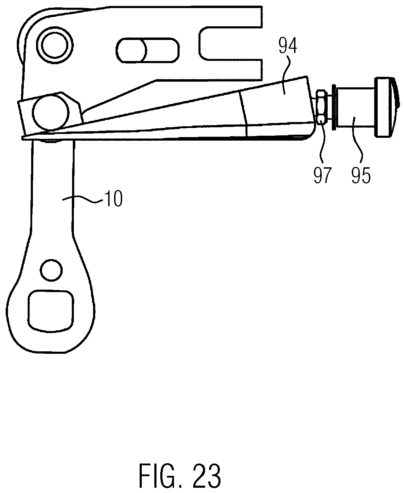

Figure 23 shows a further view of the adjustment means as provided in the present embodiment. More precisely, in the view shown in Figure 23, the support 9 as well as the force transmitting element 10 and the lever portion 71 shown in Figures 19A and 19B in the front are omitted. As is shown in Figure 23, the pivot pin 98 comprises an angular section formed in the middle portion of the same and two circular sections formed at opposite ends of the angular section. The middle portion of the pivot pin 98 comprises a flat lower section which is in contact with the upper surface of the wedge element 94. Accordingly, when the wedge element 94 is moved relative to the pivot pin 98, the lower flat surface of the middle portion rides on the upper surface of the wedge element 94. With such a construction, a reliable adjustment function for adjusting the distance of the pivot pin 98 with respect to the support 9 is achieved.

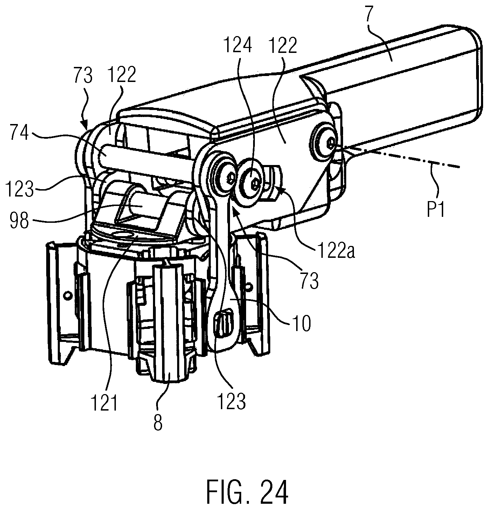

In the operating mechanism 6 described so far, the presettable distance D at which the force application joint 73 is positioned with respect to the support 9 in the tensioning state is adjustable by adjusting the distance between the pivot P and the support. However, it is also possible to adjust the presettable distance D by means of changing the pivotal distance d1. Therefore, an alternative embodiment showing an adjustment means in which the pivotal distance d1 is changed will be described with reference to Figure 24 to 27.

As is shown in Figure 24, the alternative operating mechanism also comprises a lever 7, a force transmitting element 10 connected to a force application join 73 by means of a force application pin 74. The alternative operating mechanism is connected to the tensioning member 8 by means of the force transmitting element 10.

The alternative operating mechanism comprises a first adjusting portion 122 which comprises a plate like shape. A second adjusting portion 123 which also comprises a plate like shape is arranged right next and parallel to the first adjusting portion 122. The first adjusting portion 122 and the second adjusting portion 123 are pivotably movable with respect to each other about a pivot axis P1. In the alternative operating mechanism shown in Figure 24, the second adjusting portion 123 is fixedly and non-rotatably coupled to the lever 7.

The force application joint 73, more precisely the force application pin 74, is coupled to the first adjusting portion 122. The pivot pin 98 is coupled to the second adjusting portion 123 thereby pivotably supporting the second adjusting portion 123 and the lever 7 about the same. In the construction shown in Figure 24, the first adjusting portion 122 and the second adjusting portion 123 are pivotably movably arranged about the pivot axis P1 at a first end of the same. At the opposite ends of the first adjusting portion 122 and the second adjusting portion 123, the force application pin 74 and the pivot pin 98 are coupled, respectively. Consequently, when the first adjusting portion 122 is pivoted with respect to the second adjusting portion 123 about the pivot axis P1, the pivotal distance d1 between the force application joint 73 and the pivot pin 98 is changed.

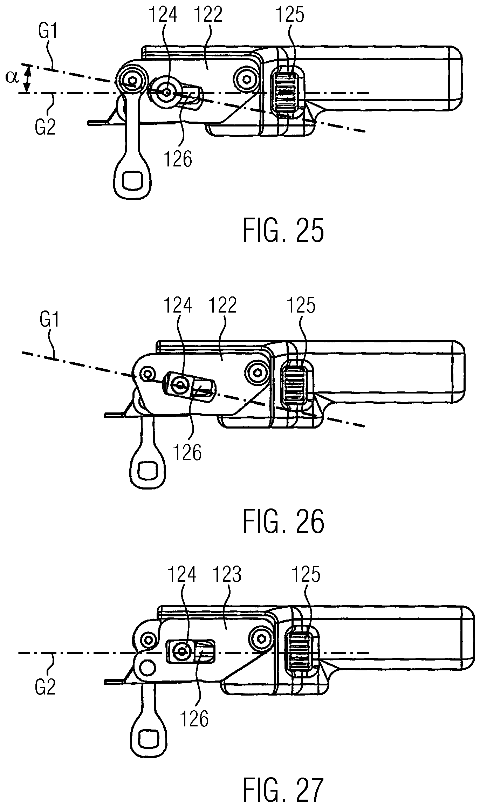

In order to effect such a movement of the first adjusting portion 122 about the pivot axis P1, the first adjusting portion 122 comprises a first guiding track 122a and the second adjusting portion 123 comprises a second guiding track 123a. In the present embodiment, both guiding tracks are elongate straight grooves formed in the respective adjusting portions. More precisely, the first guiding track 122a extends along a first guiding track axis G1 and the second guiding track 123a extends along a second guiding track axis G2 as is shown in Figure 26 and 27, respectively. Figures 26 and 27 are side views of the alternative operating mechanism wherein the first adjusting portion 122 which is shown in front of the second adjusting portion 123 and therefore masks the same in Figure 26 is removed in Figure 27.

The first guiding track 122a and the second guiding track 123a, more precisely, the first guiding track axis G1 and the second guiding track axis G2 are inclined with respect to each other at an angle α as is shown in Figure 25 showing an overlay of both guiding track axes. An adjusting pin 124 is movably guided in both guiding tracks 122a and 123a. Consequently, a movement of the adjusting pin 124 is transferred into a pivoting movement of the first adjusting portion 122 with respect to the second adjusting portion 123 about the pivot axis P1.

In order to effect a movement of the adjusting pin 124 and consequently a rotational movement of the first adjusting portion 122, the alternative operating mechanism further comprises a threaded rod 126 which is inserted into a corresponding threaded opening formed in the adjusting pin 124 with one end. The other end of the threaded rod 126 is connected to an operating portion 125 which in the present embodiment is a rotatable wheel which can be rotated by a user. Furthermore, the threaded rod 126 is rotatably but axially non movably held in the operating mechanism. Due to this construction, a rotational movement of the threaded rod 126 is possible by operating the operating portion 125 and the rotation of the threaded rod 126 is transferred into a shifting movement of the adjusting pin 124 in the axial direction of the threaded rod 126. By this, the adjusting rod 124 is moved in the guiding tracks 122a and 123a leading to a pivotal movement of the first adjusting portion 122 with respect to the second adjusting portion 123 about the pivot axis P1. Accordingly, a simple and reliable mechanism for adjusting the pivotal distance d1 is provided.

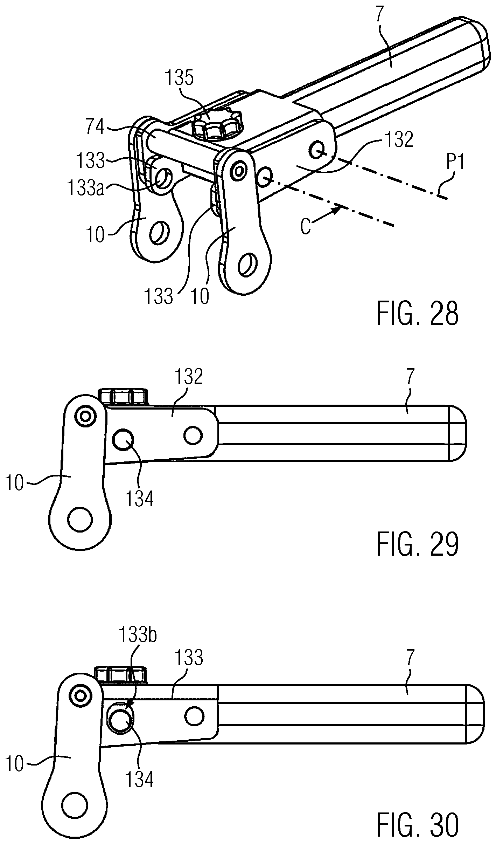

A modification of the alternative embodiment shown in Figure 24 is described with reference to Figures 28 to 31. As is the case in the embodiment shown in Figure 24, the adjustment means according to the modification shown in Figure 28 comprises a first adjusting portion 132 and a second adjusting portion 133 which are arranged pivotably movable with respect to each other about a pivot axis P1. In the arrangement shown in Figure 28, the second adjusting portion 133 is integrally formed with the lever 7. The force application pin 74 is connected to the first adjusting portion 132 and an opening 133a is provided in the second adjusting portion 133 for accommodating the pivot pin 98 therein. The first adjusting portion 132 is coupled to an adjusting pin 134 arranged movably with respect to the second adjusting portion 133.

According to the construction shown in Figures 28 to 31, the adjusting pin 134 extends through an opening 133b provided in the second adjusting portion 133 and is fixedly connected to the first adjusting portion 132. The opening 133b is best seen in Figure 30. The opening 133b provided in the second adjusting portion 133 is dimensioned such that a sufficient movement of the adjusting pin 134 with respect to the second adjusting portion 133 is possible.

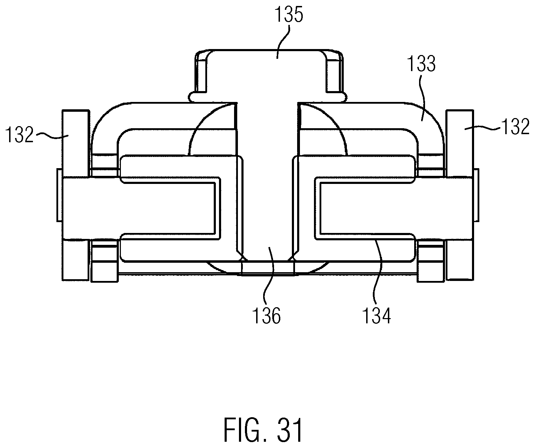

In order to move the adjusting pin 134, the adjusting means comprises an operating member 135 provided on an upper portion of the lever 7. A screw 136 which extends into a threaded opening provided in the adjusting pin 134 is connected to the operating member 135 and thereby rotatably but axially non movable supported on the lever. Consequently, by rotating the operating member 135, the screw 136 is rotated as well and the rotation of the screw is transferred into a movement of the adjusting pin 134 in the axial direction of the screw 136. Thus, as can be gathered from Figure 31, a rotation of the operating member 135 results in a movement of the adjusting pin 134 towards and away from the upper portion of the lever 7. As is also shown in Figure 31, the second adjusting portion 133 is integrally formed with the lever 7. Accordingly, a movement of the adjusting pin 134 is provided relative to the second adjusting portion 133 thereby effecting a pivoting movement of the first adjusting portion 132 with respect to the second adjusting portion 133 about the pivot axis P1. Consequently, a simple mechanism for adjusting the pivotal distance d1 between the force application joint 73 and the pivot P is achieved.

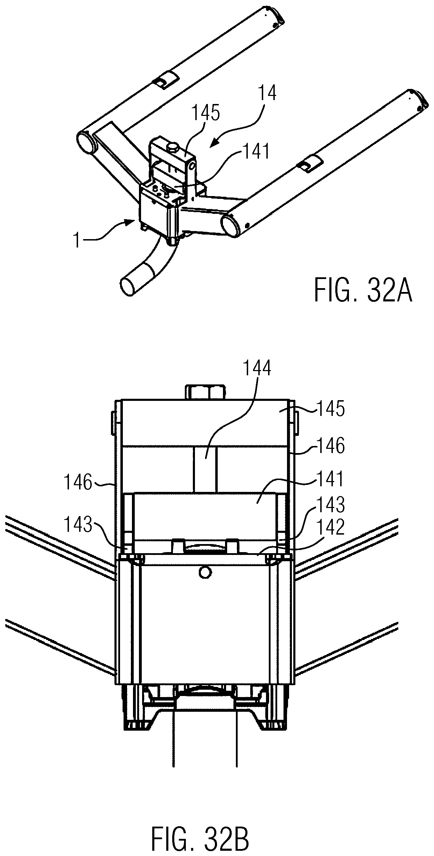

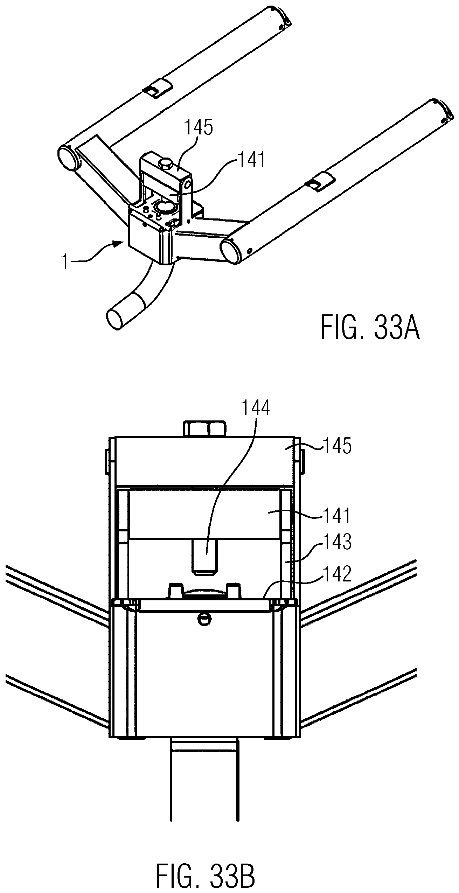

An alternative operating mechanism according to the present subject matter is described in Figures 32 and 33.

Figure 32A and 32B show the alternative operating mechanism 14 in an untensioned state and Figure 33A and 33B show the alternative operating mechanism 14 in a tensioned state.

The alternative operating mechanism 14 comprises a force application yoke 141 which is arranged movably relative to a support 142. In the present embodiment, the support 142 corresponds to an upper portion of the housing of the clamp mechanism 1. The force application yoke 141 is connected to two force transmitting elements 143 each of which being connected to the tensioning member 8 of the clamp mechanism 1. Accordingly, by moving the force application yoke 141 relative to the support 142, the tensioning member 8 is also moved.

Furthermore, the alternative operating mechanism 14 comprises a supporting yoke 145 arranged with a distance on the support 142 by means of two supporting legs 146. The supporting yoke 145 comprises an opening into which a screw 144 is inserted. The opening comprises a dimension allowing the screw 144 to freely rotate therein. As is shown in Figures 32A and 32B, the screw 144 is arranged such that it extends in the downward direction and passes the opening provided in the supporting yoke 145. More precisely, the screw head of the screw 144 rests on the upper side of the supporting yoke 145. The force application yoke 141 comprises a threaded opening provided so as to accommodate a threaded section of the screw 144. By this arrangement, a rotational movement of the screw 144 results in a movement of the force application yoke 141 in the direction of the longitudinal axis of the screw 144. Thus, by operating the screw 144, the force application yoke 141 can be moved up to a position in which the operating mechanism 14 is in a tensioning state. As described above with respect to the clamp mechanism 1, the tensioning state is reached when the tensioning member 8 reaches a position in which a sufficient clamping force generated on the tow ball 20 by the clamp members 5. Consequently, a simple mechanism for an operating the tensioning member 8 is achieved.

Figures 33A and 33B show a tensioning state of the alternative operating mechanism 14. As is shown in Figure 33B, the force application yoke 141 is moved to a position near the supporting yoke 145 which - as already described above - is provided on the support with a distance from the support. Accordingly, by movement in this position, the tensioning member 8 is pulled up by the same distance leading to the tensioning of the clamp mechanism 1.

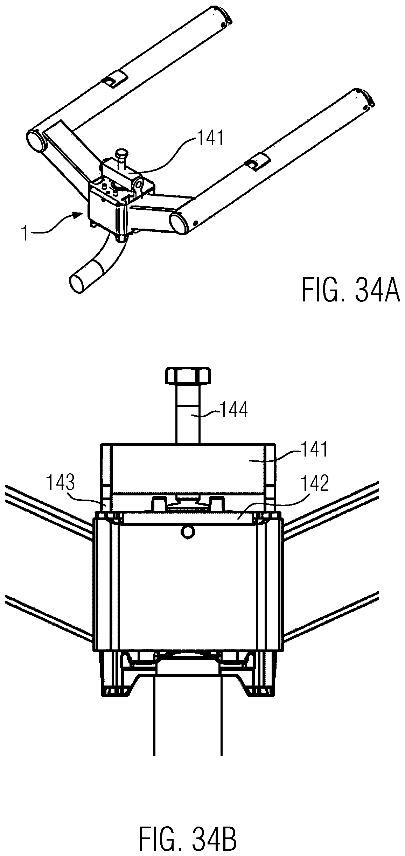

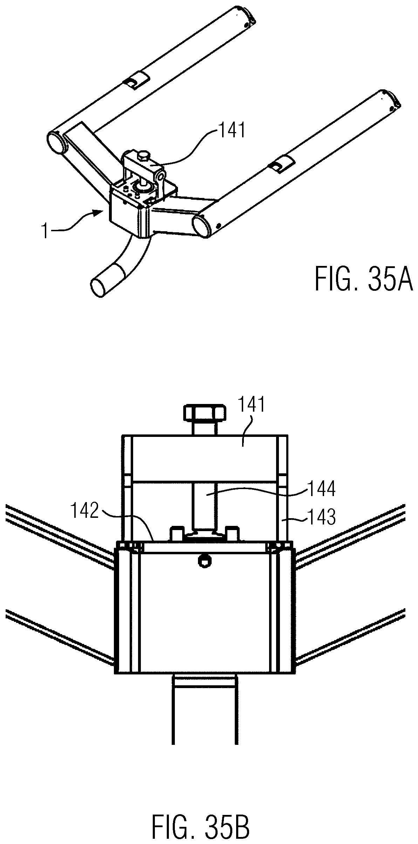

A modification of the alternative operating mechanism described with respect to Figures 32 and 33 is described with respect to Figures 34 and 35. Figures 34A and 34B show the modified alternative operating mechanism in a state in which the tensioning member is in an untensioned state and Figures 35A and 35B show the modified alternative operating mechanism in a state in which the tensioning member is in a tensioned state, respectively. The construction according to the modification of the operating mechanism differs from the construction shown in Figures 32 and 33 in that the supporting yoke 145 is omitted here. As described above, the function of the supporting yoke 145 was to provide a support for the screw 144. By this, it was possible to pull the force application yoke 141 towards the supporting yoke 145 for moving the tensioning member 8 to the tensioned position. In this modification, the screw 144 is directly supported against the support 142 instead of on a supporting yoke. Thus, by rotating the screw 144, the supporting force is directly transferred to the support 142 via the screw 144 and the force application yoke 141 is moved with respect to the support by a pushing force. In this connection, it is beneficial if the tensioning member is coupled to a return spring urging the tensioning member in the downward direction, that is in a direction in which the clamp mechanism is untensioned. As can be seen in Figures 35A and 35B, the predetermined distance is also reachable by this arrangement which is even more simple in construction compared to the alternative operating mechanism using the supporting yoke 145. Accordingly, a simple mechanism for tensioning the clamp mechanism 1 is provided.

**REFERENCE SIGNS**

| | | | |
|---|---|---|---|
| 1 | clamp mechanism | 7 | lever |
| | | 71 | lever portion |
| 2 | coupling device | 72 | recess |
| 20 | tow ball | 73 | force application joint |
| 20a | first area | 74 | force application pin |
| 20b | second area | 75 | engagement member |
| 21 | tow ball neck | | |
| | | 8 | tensioning member |
| 3 | ball retainer | 81 | main body |
| 31 | support portion | 82 | guide portions |
| 32 | leg portion | 83 | force receiving section |
| 33 | leg portion | 84 | cutout |
| 34 | clamp member spaces | 85 | fixation portions |
| 35 | sliding surface | 86 | clamp openings |
| 36 | recesses | 87 | ball retainer guide sections |
| 37 | ball support surface | 88 | force application sections |
| | | 88a | sliding surface |
| 4 | housing | 89 | bridging portion |
| 41 | load carrying means | | |
| 42 | load carrying means | 9 | support |
| 43 | upper portion | 91 | disc spring |
| 44 | openings | 92 | base portion |
| | | 93 | side walls |
| 5 | clamp members | 94 | wedge element |
| 51 | protrusions | 95 | operating member |
| 52 | engaging portion | 96 | rear wall |
| 53 | neck support surface | 97 | screw |
| 54 | openings | 98 | pivot pin |
| 55 | abutment portion | | |
| 56 | force receiving surface | 10 | force transmitting element |
| 57 | ball clamping surface | 101 | first opening |
| | | 102 | second opening |
| 6 | operating mechanism | | |
| 11 | abutment portion | P1 | pivot axis in adjusting mechanism |
| 12 | opening | | |
| 122 | first adjusting portion | T | tow ball abutment element |
| 122a | first guiding track | | |
| 123 | second adjusting portion | | |
| 123a | second guiding track | | |
| 124 | adjusting pin | | |
| 125 | operating portion | | |
| 126 | threaded rod | | |
| | | | |
| 132 | first adjusting portion | | |
| 133 | second adjusting portion | | |
| 133a | opening | | |
| 133b | opening | | |
| 134 | adjusting pin | | |
| 135 | operating member | | |
| 136 | screw | | |
| | | | |
| 14 | alternative operating mechanism | | |
| 141 | force application yoke | | |
| 142 | support | | |
| 143 | force transmitting element | | |
| 144 | screw | | |
| 145 | supporting yoke | | |
| | | | |
| A1 | pivot axis of clamp member | | |
| A2 | pivot axis of pivot pin / hinge axis | | |
| CL | center axis | | |
| D | distance | | |
| d1 | pivotal distance | | |
| d2 | pivotal distance | | |
| E | elastic members | | |
| F | force application section | | |
| G1 | first guiding track axis | | |
| G2 | second guiding track axis | | |
| L | load carrier | | |
| P | pivot | | |

## Claims

1. Clamp mechanism (1) mountable to a coupling device (2) having a tow ball (20) supported by a tow ball neck (21), the clamp mechanism (1) comprising:
a ball retainer (3) having a ball support surface (37) contactable at least to a first area (20a) of said tow ball (20) located opposite to said tow ball neck (21);
at least two clamp members (5) which are distributed about a center axis (CL) of said ball support surface (37), wherein each of said clamp members (5) is movably arranged with respect to said ball retainer (3) and has a ball clamping surface (57) contactable at least to a second area (20b) of said tow ball (20) located on the side of said tow ball neck (21), **characterized in that** it is further comprising a tensioning member (8) arranged movably along the direction of said center axis (CL) with respect to said ball retainer (3) and interacting with each of said clamp members (5) such that by applying a force to said tensioning member (8), a clamping force acting between said ball support surface (37) and said ball clamping surfaces (57) to said tow ball (20) is achievable.

2. Clamp mechanism (1) according to claim 1, wherein by an interaction between said tensioning member (8) and said at least two clamp members (5), a movement of said at least two clamp members (5) towards said ball support surface (37) of said ball retainer (3) is achievable.

3. Clamp mechanism (1) according to claim 1or 2, wherein by an interaction of said tensioning member (8) and said at least two clamp members (5), a movement of said tensioning member (8) along the direction of said center axis (CL) is at least partially transformed into a movement of said at least two clamp members (5) towards said center axis (CL).

4. Clamp mechanism (1) according to one of the preceding claims, wherein each of said clamp members (5) comprises a force receiving surface (56) and said tensioning member (8) comprises a force application section (88) slidably contactable to said force receiving surfaces (56) of the clamp members (5).

5. Clamp mechanism (1) according to claim 4, wherein said force application section (88) comprises a sliding surface (88a) inclined with respect to the center axis (CL).

6. Clamp mechanism (1) according to one of claims 4 and 5, wherein said tensioning member (8) comprises an opening (12) for passing the tow ball (20) therethrough and wherein the inner circumference of said opening (12) forms said force application section (88) of said tensioning member (8).

7. Clamp mechanism (1) according to one of the preceding claims, wherein said tensioning member (8) accommodates said clamp members (5).

8. Clamp mechanism (1) according to one of the preceding claims, further comprising a housing (4) wherein said tensioning member (8) is slidably guided in said housing (4), wherein said ball retainer (3) is coupled to said housing (4) and wherein said ball retainer (3) is preferably integrally formed with said housing (4).

9. Clamp mechanism (1) according to one of claims 1 to 8, wherein each of said clamp members (5) comprises a neck support surface (53) contactable at least to said tow ball neck (21), each of said clamp members (5) being
- movable with respect to said center axis (CL) between an open position enabling the insertion of said tow ball (20) between said clamp members (5) and a closed position enabling an abutment of each of said neck support surfaces (53) on said tow ball neck (21), and
- movable along the direction of said center axis (CL) between a proximal position and a distal position with respect to said ball retainer (3),
said clamping mechanism (1) further comprising an arrangement for releasably locking each of said clamp members (5) in said closed position when positioned in said proximal position.

10. Clamp mechanism (1) according to claim 9, wherein said ball retainer (3) further comprises a receiving portion (36) and said clamp members (5) comprise an engaging portion (52) engageable with said receiving portion (36) for blocking a movement of said clamp members (5)
wherein said receiving portion (36) is preferably a recess formed in said ball retainer (3) and said engaging portion (52) is preferably a protrusion formed on said clamp member (5).

11. Clamp mechanism (1) according to one of claims 9 or 10, wherein said ball retainer (3) has sliding surfaces (35) for slidably supporting said clamp members (5) in the direction of the center axis (CL).

12. Clamp mechanism (1) according to one of claims 9 to 11, further comprising an elastic element (E) for urging said clamp members (5) into said open position.

13. Clamp mechanism (1) according to one of the preceding claims, wherein said clamp members (5) are pivotable about a pivot axis (A1) perpendicular and/or offset with respect to said center axis (CL) and wherein said movement of said tensioning member (8) effects a pivoting movement of said clamp members (5).

14. Clamp mechanism (1) according to claim 13, further comprising a pivoting means for pivoting said clamp members (5), wherein said pivoting means comprises a force receiving member contactable with said tow ball (20) and transferring a pushing force exerted thereon by said tow ball (20) into a pivoting movement of said clamp members (5).

15. Clamp mechanism (1) according to claim 14, wherein said force receiving member comprises an abutment portion (55) formed on said clamp members (5) and contactable with said first area (20a) of said tow ball (20), and
wherein preferably said pivot axis (A1) of said clamp members (5) is with respect to a direction of the center axis (CL) arranged between said abutment portion (55) and said ball clamping surface (57).

16. Clamp mechanism (1) according to claim 14, wherein said pivoting means comprises a tow ball abutment element (T) pushable along said center axis (CL) by said tow ball (20) and operatively connected to said clamp members (5) such that a pushing force exerted on said tow ball abutment element (T) is transferred into a pivoting movement of said clamp members (5), wherein preferably said tow ball abutment element (T) is a flexible element connecting said clamp members (5).

17. Coupling for connecting a load carrier to a ball hitch, the coupling comprising a clamp mechanism (1) according to one of the preceding claims and an operating mechanism (6) for operating said clamp mechanism (1), the operating mechanism (6) comprising
a lever (7) pivotably supported on a support (9) about a pivot (P),
a force application joint (73) connected to said lever (7),
a force transmitting element (10) pivotably connected to said force application joint (73) and pivotably connected to a tensioning member (8) of said clamp mechanism (1) at a force application section (F) for applying a force on said tensioning member (8), wherein a pivotal distance (d1) between said force application joint (73) and said pivot (P) is smaller than a pivotal distance (d2) between said force application joint (73) and said force application section (F), wherein in a tensioning position of the lever (7), the force application joint (73) is positioned at a presettable distance (D) from said support (9), and
an adjustment means for presetting said presettable distance (D) between said force application joint (73) and said support (9) in order to adapt said tensioning force on said tensioning member (8).

18. Coupling according to claim 17, wherein said adjustment means comprises a spacing means for adjusting the distance between said pivot and said support (9),
wherein said spacing means comprises a wedge (94) supporting said pivot (P) on one side and contacting said support (9) on the opposite side, said wedge (94) being movably arranged between said pivot (P) and said support (9).

19. Coupling for connecting a load carrier (L) to a ball hitch, the coupling comprising a clamp mechanism (1) according to one of claims 1 to 16 and an operating mechanism (14) for operating said clamp mechanism (1), the operating mechanism (14) comprising
a force application yoke (141) supported movably relative to a support (142),
a force transmitting element (143) connected to said force application yoke (141) and connected to a tensioning member (8) of said clamp mechanism (1) at a force application section (F) for applying a force on said tensioning member (8),
an operating mechanism for effecting the movement of the force application yoke (141), said operating mechanism comprising a screw (144) threadedly engaged with said force application yoke (141), wherein said screw (144) abutts against said support (142) at one end or wherein said screw (144) is rotatably and axially non movably supported on a supporting yoke (145) arranged at a distance from the support (142), such that a rotational movement of said screw (144) is transferred into a movement of the force application yoke (141) in an axial direction of said screw (144),
wherein in a tensioned position of the force application yoke (141), the force application yoke (141) is positioned at a predetermined distance (D) from said support (142), said predetermined distance being larger than a distance of the force application yoke (141) from said support (142) in an untensioned position.

## Patentansprüche

1. Spannvorrichtung (1), die an einer Kupplungsvorrichtung (2) befestigbar ist, die eine Kupplungskugel (20) aufweist, die von einem Anhängerkupplungshals (21) getragen wird, wobei die Spannvorrichtung (1) Folgendes umfasst:
einen Kugelhalter (3) mit einer Kugelabstützfläche (37), die mit zumindest einem ersten Bereich (20a) der Kupplungskugel (20) in Berührung bringbar ist, der sich gegenüber dem Anhängerkupplungshals (21) befindet;
mindestens zwei Spannelemente (5), die um eine Mittelachse (CL) der Kugelabstützfläche (37) verteilt sind, wobei jedes der Spannelemente (5) bezogen auf den Kugelhalter (3) beweglich angeordnet ist und eine Kugelspannfläche (57) aufweist, die mit zumindest einem zweiten Bereich (20b) der Kupplungskugel (20) in Berührung bringbar ist, der sich auf der Seite des Anhängerkupplungshalses (21) befindet,
**dadurch gekennzeichnet, dass** sie
ferner ein Festspannelement (8) umfasst, das bezogen auf den Kugelhalter (3) beweglich entlang der Richtung der Mittelachse (CL) angeordnet ist und mit jedem der Spannelemente (5) derart in Wechselwirkung zusammenarbeitet, dass durch Einleiten einer Kraft in das Festspannelement (8) eine Spannkraft erreichbar ist, die zwischen der Kugelabstützfläche (37) und den Kugelspannflächen (57) auf die Kupplungskugel (20) wirkt.

2. Spannvorrichtung (1) nach Anspruch 1, wobei durch eine Wechselwirkung zwischen dem Festspannelement (8) und den mindestens zwei Spannelementen (5) eine Bewegung der mindestens zwei Spannelemente (5) in Richtung der Kugelabstützfläche (37) des Kugelhalters (3) erreichbar ist.

3. Spannvorrichtung (1) nach Anspruch 1 oder 2, wobei durch eine Wechselwirkung des Festspannelements (8) und der mindestens zwei Spannelemente (5) eine Bewegung des Festspannelements (8) entlang der Richtung der Mittelachse (CL) zumindest teilweise in eine Bewegung der mindestens zwei Spannelemente (5) in Richtung der Mittelachse (CL) umgewandelt wird.

4. Spannvorrichtung (1) nach einem der vorhergehenden Ansprüche, wobei jedes der Spannelemente (5) eine Kraftaufnahmefläche (56) umfasst und das Festspannelement (8) einen Krafteinleitungsabschnitt (88) umfasst, der mit den Kraftaufnahmeflächen (56) der Spannelemente (5) verschiebbar in Berührung bringbar ist.

5. Spannvorrichtung (1) nach Anspruch 4, wobei der Krafteinleitungsabschnitt (88) eine Gleitfläche (88a) umfasst, die bezogen auf die Mittelachse (CL) geneigt ist.

6. Spannvorrichtung (1) nach Anspruch 4 oder 5, wobei das Festspannelement (8) eine Öffnung (12) zum Hindurchführen der Kupplungskugel (20) umfasst und wobei der Innenumfang der Öffnung (12) den Krafteinleitungsabschnitt (88) des Festspannelements (8) bildet.

7. Spannvorrichtung (1) nach einem der vorhergehenden Ansprüche, wobei das Festspannelement (8) die Spannelemente (5) aufnimmt.

8. Spannvorrichtung (1) nach einem der vorhergehenden Ansprüche, die ferner ein Gehäuse (4) umfasst, wobei das Festspannelement (8) verschiebbar in dem Gehäuse (4) geführt ist, wobei der Kugelhalter (3) mit dem Gehäuse (4) verbunden ist und wobei der Kugelhalter (3) vorzugsweise einteilig mit dem Gehäuse (4) ausgebildet ist.

9. Spannvorrichtung (1) nach einem der Ansprüche 1 bis 8, wobei jedes der Spannelemente (5) eine Halsabstützfläche (53) umfasst, die zumindest mit dem Anhängerkupplungshals (21) in Berührung bringbar ist, wobei jedes der Spannelemente (5)
- bezogen auf die Mittelachse (CL) zwischen einer offenen Stellung, die das Schieben der Kupplungskugel (20) zwischen die Spannelemente (5) ermöglicht, und einer geschlossenen Stellung beweglich ist, die ein Anstoßen von jeder der Halsabstützflächen (53) an dem Anhängerkupplungshals (21) ermöglicht, und
- entlang der Richtung der Mittelachse (CL) zwischen einer proximalen Stellung und einer distalen Stellung bezogen auf den Kugelhalter (3) beweglich ist,
wobei die Spannvorrichtung (1) ferner eine Anordnung zum lösbaren Arretieren jedes der Spannelemente (5) in der geschlossenen Stellung umfasst, wenn sie in der proximalen Stellung platziert sind.

10. Spannvorrichtung (1) nach Anspruch 9, wobei der Kugelhalter (3) ferner einen Aufnahmeabschnitt (36) umfasst und die Spannelemente (5) einen Eingriffabschnitt (52) umfassen, der mit dem Aufnahmeabschnitt (36) in Eingriff bringbar ist, damit eine Bewegung der Spannelemente (5) blockiert wird,
wobei der Aufnahmeabschnitt (36) vorzugsweise eine Aussparung ist, die in dem Kugelhalter (3) ausgebildet ist, und der Eingriffabschnitt (52) vorzugsweise ein Vorsprung ist, der an dem Spannelement (5) ausgebildet ist.

11. Spannvorrichtung (1) nach Anspruch 9 oder 10, wobei der Kugelhalter (3) Gleitflächen (35) zum verschiebbaren Halten der Spannelemente (5) in Richtung der Mittelachse (CL) aufweist.

12. Spannvorrichtung (1) nach einem der Ansprüche 9 bis 11, die ferner ein elastisches Element (E) zum Drücken der Spannelemente (5) in die offene Stellung umfasst.

13. Spannvorrichtung (1) nach einem der vorhergehenden Ansprüche, wobei die Spannelemente (5) um eine Schwenkachse (A1) senkrecht und/oder versetzt zu der Mittelachse (CL) herum schwenkbar sind und wobei die Bewegung des Festspannelements (8) eine Schwenkbewegung der Spannelemente (5) bewirkt.

14. Spannvorrichtung (1) nach Anspruch 13, die ferner ein Schwenkmittel zum Schwenken der Spannelemente (5) umfasst, wobei das Schwenkmittel ein Kraftaufnahmeelement umfasst, das mit der Kupplungskugel (20) in Berührung bringbar ist und eine Schubkraft, die von der Kupplungskugel (20) darauf ausgeübt wird, in eine Schwenkbewegung der Spannelemente (5) überträgt.

15. Spannvorrichtung (1) nach Anspruch 14, wobei das Kraftaufnahmeelement einen Anstoßabschnitt (55) umfasst, der an den Spannelementen (5) ausgebildet ist und mit dem ersten Bereich (20a) der Kupplungskugel (20) in Berührung bringbar ist, und
wobei vorzugsweise die Schwenkachse (A1) der Spannelemente (5) bezogen auf eine Richtung der Mittelachse (CL) zwischen dem Anstoßabschnitt (55) und der Kugelspannfläche (57) angeordnet ist.

16. Spannvorrichtung (1) nach Anspruch 14, wobei das Schwenkmittel ein Kupplungskugel-Anstoßelement (T) umfasst, das von der Kupplungskugel (20) entlang der Mittelachse (CL) schiebbar ist und funktionsmäßig mit den Spannelementen (5) derart verbunden ist, dass eine Schubkraft, die auf das Kupplungskugel-Anstoßelement (T) ausgeübt wird, in eine Schwenkbewegung der Spannelemente (5) übertragen wird, wobei vorzugsweise das KupplungskugelAnstoßelement (T) ein flexibles Element ist, das die Spannelemente (5) verbindet.

17. Verbindung zum Verbinden eines Lastenträgers mit einer Kugelkopfkupplung, wobei die Verbindung eine Spannvorrichtung (1) nach einem der vorhergehenden Ansprüche sowie einen Betätigungsmechanismus (6) zum Betätigen der Spannvorrichtung (1) umfasst, wobei der Betätigungsmechanismus (6) Folgendes umfasst:
einen Hebel (7), der an einem Träger (9) schwenkbar um eine Lagerung (P) herum gelagert ist,
eine Krafteinleitungsverbindung (73), die mit dem Hebel (7) verbunden ist,
ein Kraftübertragungselement (10), das schwenkbar mit der Krafteinleitungsverbindung (73) und schwenkbar mit einem Festspannelement (8) der Spannvorrichtung (1) an einem Krafteinleitungsabschnitt (F) verbunden ist, um eine Kraft in das Festspannelement (8) einzuleiten, wobei ein Schwenkweg (d1) zwischen der Krafteinleitungsverbindung (73) und der Lagerung (P) kürzer ist als ein Schwenkweg (d2) zwischen der Krafteinleitungsverbindung (73) und dem Krafteinleitungsabschnitt (F),
wobei die Krafteinleitungsverbindung (73) in einer Anzugstellung des Hebels (7) in einem voreinstellbaren Abstand (D) zu dem Träger (9) platziert ist, und
ein Einstellmittel zum Voreinstellen des voreinstellbaren Abstands (D) zwischen der Krafteinleitungsverbindung (73) und dem Träger (9) zum Anpassen der Festspannkraft auf das Festspannelement (8).

18. Verbindung nach Anspruch 17, wobei das Einstellmittel ein Abstandsmittel zum Einstellen des Abstands zwischen der Lagerung und dem Träger (9) umfasst,
wobei das Abstandsmittel einen Keil (94) umfasst, der auf einer Seite die Lagerung (P) trägt und auf der gegenüberliegenden Seite den Träger (9) berührt, wobei der Keil (94) beweglich zwischen der Lagerung (P) und dem Träger (9) angeordnet ist.

19. Verbindung zum Verbinden eines Lastenträgers (L) mit einer Kugelkopfkupplung, wobei die Verbindung eine Spannvorrichtung (1) nach einem der Ansprüche 1 bis 16 und einen Betätigungsmechanismus (14) zum Betätigen der Spannvorrichtung (1) umfasst, wobei der Betätigungsmechanismus (14) Folgendes umfasst:
einen Krafteinleitungsbügel (141), der bezogen auf einen Träger (142) beweglich gelagert ist,
ein Kraftübertragungselement (143), das mit dem Krafteinleitungsbügel (141) und mit einem Festspannelement (8) der Spannvorrichtung (1) an einem Krafteinleitungsabschnitt (F) verbunden ist, damit eine Kraft in das Festspannelement (8) eingeleitet wird,
einen Betätigungsmechanismus zum Bewirken der Bewegung des Krafteinleitungsbügels (141), wobei der Betätigungsmechanismus eine Schraube (144) umfasst, die mit dem Krafteinleitungsbügel (141) verschraubt in Eingriff steht, wobei die Schraube (144) an einem Ende an den Träger (142) anstößt oder wobei die Schraube (144) drehbar und axial nicht beweglich an einem Haltebügel (145) gehalten ist, der derart in einem Abstand zum Träger (142) angeordnet ist, dass eine Drehbewegung der Schraube (144) in eine Bewegung des Krafteinleitungsbügels (141) in einer axialen Richtung der Schraube (144) übertragen wird,
wobei der Krafteinleitungsbügel (141) in einer angezogenen Stellung des Krafteinleitungsbügels (141) in einem vorher festgelegten Abstand (D) zu dem Träger (142) platziert ist, wobei der vorher festgelegte Abstand größer ist als ein Abstand des Krafteinleitungsbügels (141) zu dem Träger (142) in einer spannungslosen Stellung.

## Revendications

1. Mécanisme de serrage (1) pouvant être monté sur un dispositif de couplage (2) comportant une boule d'attelage (20) soutenue par un col de boule d'attelage (21), le mécanisme de serrage (1) comprenant :
un élément de retenue de boule (3) comportant une surface de support de boule (37) pouvant être amenée en contact au moins avec une première zone (20a) de ladite boule d'attelage (20) située à l'opposé dudit col de boule d'attelage (21) ;
au moins deux éléments de serrage (5) qui sont distribués autour d'un axe central (CL) de ladite surface de support de boule (37), chacun desdits éléments de serrage (5) étant disposé mobile par rapport audit élément de retenue de boule (3) et comportant une surface de serrage de boule (57) pouvant être amenée en contact au moins avec une seconde zone (20b) de ladite boule d'attelage (20) située sur le côté dudit col de boule d'attelage (21),
**caractérisé en ce qu'**il comprend en outre un élément de contrainte de tension (8) disposé mobile le long de la direction dudit axe central (CL) par rapport audit élément de retenue de boule (3) et interagissant avec chacun desdits éléments de serrage (5) de telle sorte que, en appliquant une force sur ledit élément de contrainte de tension (8), une force de serrage agissant entre ladite surface de support de boule (37) et lesdites surfaces de serrage de boule (57) sur ladite boule d'attelage (20) peut être obtenue.

2. Mécanisme de serrage (1 selon la revendication 1, dans lequel, par une interaction entre ledit élément de contrainte de tension (8) et lesdits au moins deux éléments de serrage (5), un mouvement desdits au moins deux éléments de serrage (5) vers ladite surface de support de boule (37) dudit élément de retenue de boule (3) peut être obtenu.

3. Mécanisme de serrage (1) selon la revendication 1 ou 2, dans lequel, par une interaction dudit élément de contrainte de tension (8) et desdits au moins deux éléments de serrage (5), un mouvement dudit élément de contrainte de tension (8) le long de la direction dudit axe central (CL) est au moins partiellement transformé en un mouvement desdits au moins deux éléments de serrage (5) vers ledit axe central (CL).

4. Mécanisme de serrage (1) selon l'une des revendications précédentes, dans lequel chacun desdits éléments de serrage (5) comprend une surface de réception de force (56) et ledit élément de contrainte de tension (8) comprend une partie d'application de force (88) pouvant être amenée en contact de manière coulissante avec lesdites surfaces de réception de force (56) des éléments de serrage (5).

5. Mécanisme de serrage (1) selon la revendication 4, dans lequel ladite partie d'application de force (88) comprend une surface de glissement (88a) inclinée par rapport à l'axe central (CL).

6. Mécanisme de serrage (1) selon l'une des revendications 4 et 5, dans lequel ledit élément de contrainte de tension (8) comprend une ouverture (12) pour faire passer la boule d'attelage (20) à travers celui-ci et dans lequel la circonférence intérieure de ladite ouverture (12) forme ladite partie d'application de force (88) dudit élément de contrainte de tension (8).

7. Mécanisme de serrage (1) selon l'une des revendications précédentes, dans lequel ledit élément de contrainte de tension (8) reçoit lesdits éléments de serrage (5).

8. Mécanisme de serrage (1) selon l'une des revendications précédentes, comprenant en outre un boîtier (4) dans lequel ledit élément de contrainte de tension (8) est guidé de manière coulissante dans ledit boîtier (4), dans lequel ledit élément de retenue de boule (3) est couplé audit boîtier (4) et dans lequel ledit élément de retenue de boule (3) est de préférence formé d'un seul tenant avec ledit boîtier (4).

9. Mécanisme de serrage (1) selon l'une des revendications 1 à 8, dans lequel chacun desdits éléments de serrage (5) comprend une surface de support de col (53) pouvant être amenée en contact au moins avec ledit col de boule d'attelage (21), chacun desdits éléments de serrage (5) étant
- mobile par rapport audit axe central (CL) entre une position ouverte permettant l'insertion de ladite boule d'attelage (20) entre lesdits éléments de serrage (5) et une position fermée permettant une butée de chacune desdites surfaces de support de col (53) sur ledit col de boule d'attelage (21), et
- mobile le long de la direction dudit axe central (CL) entre une position proximale et une position distale par rapport audit élément de retenue de boule (3),
ledit mécanisme de serrage (1) comprenant en outre un agencement pour verrouiller de manière libérable chacun desdits éléments de serrage (5) dans ladite position fermée quand ils sont positionnés dans ladite position proximale.

10. Mécanisme de serrage (1) selon la revendication 9, dans lequel ledit élément de retenue de boule (3) comprend en outre une partie de réception (36) et lesdits éléments de serrage (5) comprennent une partie de prise (52) pouvant être amenée en prise avec ladite partie de réception (36) pour bloquer un mouvement desdits éléments de serrage (5),
dans lequel ladite partie de réception (36) est de préférence un enfoncement formé dans ledit élément de retenue de boule (3) et ladite partie de prise (52) est de préférence une saillie formée sur ledit élément de serrage (5).

11. Mécanisme de serrage (1) selon l'une des revendications 9 ou 10, dans lequel ledit élément de retenue de boule (3) comporte des surfaces de glissement (35) destinées à soutenir de manière coulissante lesdits éléments de serrage (5) dans la direction de l'axe central (CL).

12. Mécanisme de serrage (1) selon l'une des revendications 9 à 11, comprenant en outre un élément élastique (E) destiné à pousser lesdits éléments de serrage (5) dans ladite position ouverte.

13. Mécanisme de serrage (1) selon l'une des revendications précédentes, dans lequel lesdits éléments de serrage (5) sont pivotants sur un axe de pivotement (A1) perpendiculaire et/ou décalé par rapport audit axe central (CL) et dans lequel ledit mouvement dudit élément de contrainte de tension (8) cause un mouvement pivotant desdits éléments de serrage (5).

14. Mécanisme de serrage (1) selon la revendication 13, comprenant en outre un moyen de pivotement pour faire pivoter lesdits éléments de serrage (5), dans lequel ledit moyen de pivotement comprend un élément de réception de force pouvant être amené en contact avec ladite boule d'attelage (20) et transmettant une force de poussée exercée sur celui-ci par ladite boule d'attelage (20) dans un mouvement pivotant desdits éléments de serrage (5).

15. Mécanisme de serrage (1) selon la revendication 14, dans lequel ledit élément de réception de force comprend une partie de butée (55) formée sur lesdits éléments de serrage (5) et pouvant être amenée en contact avec ladite première zone (20a) de ladite boule d'attelage (20), et
dans lequel ledit axe de pivotement (A1) desdits éléments de serrage (5) est de préférence disposé entre ladite partie de butée (55) et ladite surface de serrage de boule (57) par rapport à une direction de l'axe central (CL).

16. Mécanisme de serrage (1) selon la revendication 14, dans lequel ledit moyen de pivotement comprend un élément de butée de boule d'attelage (T) pouvant être poussé le long dudit axe central (CL) par ladite boule d'attelage (20) et relié de manière fonctionnelle auxdits éléments de serrage (5) de telle sorte qu'une force de poussée exercée sur ledit élément de butée de boule d'attelage (T) est transmise dans un mouvement pivotant desdits éléments de serrage (5), dans lequel ledit élément de butée de boule d'attelage (T) est de préférence un élément flexible reliant lesdits éléments de serrage (5).

17. Couplage destiné à relier un support de charge à un dispositif d'attelage à boule, le couplage comprenant un mécanisme de serrage (1) selon l'une des revendications précédentes et un mécanisme d'actionnement (6) pour actionner ledit mécanisme de serrage (1), le mécanisme d'actionnement (6) comprenant
un levier (7) monté pivotant sur un support (9) autour d'un pivot (P),
une articulation d'application de force (73) reliée audit levier (7),
un élément de transmission de force (10) relié pivotant à ladite articulation d'application de force (73) et relié pivotant à un élément de contrainte de tension (8) dudit mécanisme de serrage (1) sur une partie d'application de force (F) pour appliquer une force sur ledit élément de contrainte de tension (8), dans lequel une course de pivotement (d1) entre ladite articulation d'application de force (73) et ledit pivot (P) est inférieure à une course de pivotement (d2) entre ladite articulation d'application de force (73) et ladite partie d'application de force (F),
dans lequel, dans une position de contrainte de tension du levier (7), l'articulation d'application de force (73) est positionnée à une distance préréglable (D) dudit support (9), et
un moyen d'ajustement destiné à prérégler ladite distance préréglable (D) entre ladite articulation d'application de force (73) et ledit support (9) afin d'adapter ladite force de contrainte de tension sur ledit élément de contrainte de tension (8).

18. Couplage selon la revendication 17, dans lequel ledit moyen d'ajustement comprend un moyen d'écartement destiné à ajuster la distance entre ledit pivot et ledit support (9),
dans lequel ledit moyen d'écartement comprend un coin (94) soutenant ledit pivot (P) d'un côté et venant en contact avec ledit support (9) du côté opposé, ledit coin (94) étant disposé mobile entre ledit pivot (P) et ledit support (9).

19. Couplage destiné à relier un support de charge (L) à un dispositif d'attelage à boule, le couplage comprenant un mécanisme de serrage (1) selon l'une des revendications 1 à 16 et un mécanisme d'actionnement (14) pour actionner ledit mécanisme de serrage (1), le mécanisme d'actionnement (14) comprenant
un étrier d'application de force (141) monté mobile par rapport à un support (142),
un élément de transmission de force (143) relié audit étrier d'application de force (141) et relié à un élément de contrainte de tension (8) dudit mécanisme de serrage (1) sur une partie d'application de force (F) pour appliquer une force sur ledit élément de contrainte de tension (8),
un mécanisme d'actionnement destiné à causer le mouvement de l'étrier d'application de force (141), ledit mécanisme d'actionnement comprenant une vis (144) en prise par filetage avec ledit étrier d'application de force (141), dans lequel ladite vis (144) est en butée contre ledit support (142) à une extrémité ou dans lequel ladite vis (144) est montée rotative et non mobile axialement sur un étrier de support (145) disposé à une distance du support (142), de telle sorte qu'un mouvement rotatif de ladite vis (144) est transmis dans un mouvement de l'étrier d'application de force (141) dans une direction axiale de ladite vis (144),
dans lequel, dans une position contrainte en tension de l'étrier d'application de force (141), l'étrier d'application de force (141) est positionné à une distance prédéfinie (D) dudit support (142), ladite distance prédéfinie étant supérieure à une distance de l'étrier d'application de force (141) par rapport audit support (142) dans une position non contrainte en tension.
